# EUROPEAN PATENT APPLICATION

(11) **EP 4 789 811 A1**
(43) Date of publication of application: **12.08.2026**
(21) Application number: 24875867.4
(22) Date of filing: 05.01.2024
(51) Int. Cl.: B23P 19/06, B25J 9/16, G01N 21/952

(54) **MARKING SYSTEM, METHOD THEREFOR, MARKING DEVICE AND BATTERY ASSEMBLING TOOL**

(30) Priority: 12.10.2023 CN 202311318801
(71) Applicant: Contemporary Amperex Technology Co., Limited, Ningde, Fujian 352100 (CN)
(72) Inventor: WU, Kai, Ningde, Fujian 352100 (CN); SUN, Zhiqiang, Ningde, Fujian 352100 (CN); SUN, Yanlin, Ningde, Fujian 352100 (CN); CHEN, Fanke, Ningde, Fujian 352100 (CN); GONG, Xueqing, Ningde, Fujian 352100 (CN); XIE, Yuming, Ningde, Fujian 352100 (CN); XIA, Yijun, Ningde, Fujian 352100 (CN)
(74) Representative: Ziebig Hengelhaupt Intellectual Property Attorneys Patentanwaltskanzlei PartGmbB
(86) International application number: PCT/CN2024/070912
(87) International publication number: WO 2025/077035

(57) **Abstract**

The present disclosure discloses a marking system, method and apparatus, and a battery assembly tool; the marking method is applied to a controller of the marking system, the marking system further includes: a robot and a marking apparatus, and a marking mechanism in the marking apparatus is arranged on the robot; the marking method includes: acquiring a to-be-marked result data set, the to-be-marked result data set including a position of a to-be-marked point; and based on the position of the to-be-marked point, controlling the robot to drive the marking mechanism in the marking apparatus to reach the to-be-marked point, so as to control the marking mechanism through the robot to mark the to-be-marked point.

## Description

### CROSS-REFERENCE TO RELATED APPLICATIONS

The present disclosure claims priority to Chinese Patent Application 202311318801.8, entitled "Marking system, method and apparatus, and battery assembly tool" filed on October 12, 2023, the entire content of which is incorporated by reference in the present disclosure.

### TECHNICAL FIELD

The present disclosure relates to the technical field of battery pack marking, and specifically relates to a marking system, method and apparatus, and a battery assembly tool.

### BACKGROUND

New energy batteries are more and more widely used in life and industry, for example, new energy automobiles equipped with batteries have been widely used, and batteries are increasingly used in the field of energy storage.

Self-tightening bolts are one of the key processes in production and manufacturing of battery packs, and in the production stage, it is needed to fix a module or a cell module into a box through the bolts. In related technologies, if there is a phenomenon of unqualified bolt tightening in the bolt self-tightening stage, it is usually marked manually by drawing lines to indicate relevant data of unqualified bolt tightening. Such operation will cause the problem of low marking treatment efficiency.

### SUMMARY OF THE INVENTION

The present disclosure provides a marking system, method and apparatus, and a battery assembly tool, which not only can improve marking treatment efficiency and marking safety, but also can reduce the labor cost for marking treatment.

The technical solution of the present disclosure is realized as follows:
some embodiments of the present disclosure provide a marking method applied to a marking system, the marking method is applied to a controller of the marking system, the marking system further includes: a robot and a marking apparatus, and a marking mechanism in the marking apparatus is arranged on the robot; the marking method includes:
acquiring a to-be-marked result data set, the to-be-marked result data set including a position of a to-be-marked point; and
based on the position of the to-be-marked point, controlling the robot to drive the marking mechanism in the marking apparatus to reach the to-be-marked point, so as to control the marking mechanism through the robot to mark the to-be-marked point.

The controller acquires the to-be-marked result data set having the position of the to-be-marked point, and controls the robot to drive the marking mechanism in the marking apparatus to reach a related position of the to-be-marked point based on the position of the to-be-marked point, so that the robot controls the marking mechanism to mark the to-be-marked point. Therefore, the controller, the robot and the marking mechanism are adopted to jointly realize automatic marking of the to-be-marked result data set, which not only improves the marking treatment efficiency and the marking safety, and but also reduces the labor cost for marking treatment.

In some embodiments of the present disclosure, the marking mechanism includes: a marking pen and a pen cap; the marking apparatus further includes a clamping mechanism for the pen cap, and the clamping mechanism is arranged corresponding to the robot; and the marking method includes: in response to a marking request, controlling a driving module of the clamping mechanism to carry out a first action so as to open the clamping mechanism, and after controlling the robot to place the pen cap into the clamping mechanism, controlling the driving module of the clamping mechanism again to carry out a second action so as to make the clamping mechanism clamp the pen cap.

In response to the marking request, the controller controls the driving module of the clamping mechanism to carry out related actions so as to make the clamping mechanism clamp the pen cap, thus a basis is provided for separation of the pen cap and the marking pen, and furthermore, it subsequently facilitates the robot to drive the marking pen to mark the to-be-marked point.

In some embodiments of the present disclosure, the clamping mechanism includes a clamping assembly; the driving module includes a clamping driving member which is in transmission connection with the clamping assembly; and the in response to a marking request, controlling a driving module of the clamping mechanism to carry out a first action so as to open the clamping mechanism, and after controlling the robot to place the pen cap into the clamping mechanism, controlling the driving module of the clamping mechanism again to carry out a second action so as to make the clamping mechanism clamp the pen cap includes: in response to the marking request, after controlling the robot to drive the marking mechanism to reach a preset position, controlling the clamping driving member to carry out the first action so as to drive the clamping assembly to move to enter an open state; and after the clamping assembly enters the open state, controlling the robot to place the pen cap into the clamping assembly, and controlling the clamping driving member to carry out the second action so as to separate the pen cap from the marking pen.

In response to the marking request, the robot controls the robot, the clamping driving member and the like to carry out related operations so as to make the clamping mechanism clamp the pen cap, thereby separating the pen cap from the marking pen, and subsequently facilitating the robot to drive the marking pen to mark the to-be-marked point.

In some embodiments of the present disclosure, the marking mechanism further includes: a marking driving member connected to the marking pen; the after the clamping assembly enters the open state, controlling the robot to place the pen cap into the clamping assembly, and controlling the clamping driving member to carry out the second action so as to separate the pen cap from the marking pen includes: after the clamping assembly enters the open state, controlling the robot to drive the marking driving member to drive the marking pen to stretch out, so as to place the pen cap into the clamping assembly; and after the pen cap is placed into the clamping assembly, controlling the clamping driving member to carry out the second action, so as to make the clamping assembly clamp the pen cap, and controlling the robot to drive the marking driving member to retract so as to separate the marking pen from the pen cap.

The controller controls the clamping assembly to be opened or clamped correspondingly and controls the robot to drive the marking driving member to move, so as to separate the pen cap placed into the clamping assembly from the marking pen, thus subsequently facilitating relevant marking operation.

In some embodiments of the present disclosure, the clamping mechanism further includes a detection member; and the after the pen cap is placed into the clamping assembly, controlling the clamping driving member to carry out the second action, so as to make the clamping assembly clamp the pen cap, and controlling the robot to drive the marking driving member to retract so as to separate the marking pen from the pen cap includes: after the pen cap is placed into the clamping assembly, controlling the clamping driving member to carry out the second action, and acquiring that the detection member detects that the pen cap is in the clamping assembly; and after detecting that the pen cap is in the clamping assembly, controlling the robot to drive the marking driving member to retract, so as to separate the pen cap from the marking pen.

Whether the pen cap is in the clamping assembly can be detected by the detection member, thus the accuracy of identifying separation of the pen cap and the marking pen can be further improved, and accordingly a basis is provided for the controller to subsequently control the robot to drive the marking pen to mark the to-be-marked point.

In some embodiments of the present disclosure, the based on the position of the to-be-marked point, controlling the robot to drive the marking mechanism in the marking apparatus to reach the to-be-marked point, so as to control the marking mechanism through the robot to mark the to-be-marked point includes: based on the position of the to-be-marked point, controlling the robot to drive the marking pen to reach the to-be-marked point; and after the marking pen reaches the to-be-marked point, controlling the robot to drive the marking driving member to stretch out and draw back, so as to drive the marking pen to mark the to-be-marked point.

The controller controls the robot to drive the marking driving member to move so as to achieve automatic marking treatment on the to-be-marked point, thus, the marking treatment efficiency and marking safety can be improved, and moreover, the labor cost and the like for marking treatment can be reduced.

In some embodiments of the present disclosure, the marking method further includes: in response to that the marking pen completes marking on the to-be-marked point, after controlling the robot to drive the marking pen to reach the preset position, controlling the marking driving member to stretch out so as to connect the marking pen with the pen cap; after the marking pen is connected to the pen cap, controlling the clamping driving member to carry out the first action so as to drive the clamping assembly to move to make the clamping assembly enter the open state; and after the clamping assembly enters the open state, controlling the robot to move so as to make the marking pen take the pen cap away.

After the controller controls the robot to drive the marking pen to complete marking on the to-be-marked point, the robot can be correspondingly controlled to drive the marking pen to be connected to the pen cap so that the marking pen can return to the state before marking treatment, and similarly, the robot can be controlled to move to make the marking pen and the pen cap separate from the clamping assembly, and thus the clamping assembly can reset conveniently.

In some embodiments of the present disclosure, the acquiring a to-be-marked result data set includes: based on product information of a battery pack, controlling a tightening mechanism to tighten a plurality of tightening points of the battery pack so as to obtain a tightening result data set; and based on technological parameters of the product information, determining the to-be-marked result data set from the tightening result data set.

The controller selects the to-be-marked result data set from the tightening result data set obtained by tightening the plurality of tightening points of the battery pack, and thus a basis is provided for marking unqualified tightening data subsequently.

In some embodiments of the present disclosure, the based on technological parameters of the product information, determining the to-be-marked result data set from the tightening result data set includes: selecting tightening result data corresponding to the process parameters that do not meet the product information from the tightening result data set, so as to obtain the to-be-marked result data set.

The tightening result data corresponding to the process parameters that do not meet the product information is selected, and thus a basis is provided for marking the unqualified tightening data subsequently.

In some embodiments of the present disclosure, the based on product information of a battery pack, controlling a tightening mechanism to tighten a plurality of tightening points of the battery pack so as to obtain a tightening result data set includes: in response to an in-place request transmitted by a transport trolley, acquiring the product information of the battery pack on the transport trolley; and based on the product information, controlling the tightening mechanism to tighten the plurality of tightening points of the battery pack based on preset tightening parameter values, so as to obtain the tightening result data set, in which, the preset tightening parameter values at least include: a preset torque, and a preset rotation angle.

In response to the in-place request, the controller controls the tightening mechanism to tighten the plurality of tightening points based on the preset tightening parameter values, so as to obtain the tightening result data set. Therefore, the tightening results (satisfactory tightening and unqualified tightening) can be collected, which subsequently facilitates screening of the corresponding to-be-marked result data set.

In some embodiments of the present disclosure, the marking method further includes: transmitting the tightening result data set to an upper computer, and transmitting the tightening result data set to a production management system corresponding to the battery pack by the upper computer; and/or, displaying the tightening result data set on a human-machine interface.

The acquired tightening result data set is correspondingly transmitted to the upper computer or the human-machine interface so as to store and display the tightening result data set.

Some embodiments of the present disclosure provide a marking method applied to a marking system; the marking system includes: a controller, a robot and a marking apparatus, and a marking mechanism in the marking apparatus is arranged on the robot; the marking method includes:
acquiring a to-be-marked result data set by the controller, the to-be-marked result data set including a position of a to-be-marked point;
controlling the robot to drive the marking mechanism to reach the to-be-marked point by the controller based on a position of the to-be-marked point; and
after the marking mechanism reaches the to-be-marked point, controlling the marking mechanism to mark the to-be-marked point by the robot.

Some embodiments of the present disclosure provide a marking system; the marking system includes: a controller, a robot and a marking apparatus, and a marking mechanism in the marking apparatus is arranged on the robot, where
the controller is configured to acquire a to-be-marked result data set, the to-be-marked result data set including a position of the to-be-marked point;
the controller is further configured to control the robot to drive the marking mechanism to reach the to-be-marked point based on the position of the to-be-marked point; and
the robot is configured to control the marking mechanism to mark the to-be-marked point after the marking mechanism reaches the to-be-marked point.

Some embodiments of the present disclosure provide a marking apparatus, which includes:
a marking mechanism which can be installed on a robot and is provided with a fixing member, in which, the fixing member is configured to install a marking pen, the robot is controlled by a controller of a marking system and configured to drive the marking mechanism to reach a to-be-marked point and mark the to-be-marked point, and the controller is configured to control the robot to drive the marking mechanism to reach the to-be-marked point based on a position of the to-be-marked point in a to-be-marked result data set; and
a clamping mechanism which is arranged at a position corresponding to the marking mechanism and includes a driving module and a clamping assembly which are in transmission connection, in which, the clamping assembly can be driven by the driving module to clamp or release a pen cap of the marking pen.

Because the marking mechanism can be installed on the robot, the robot can drive the marking mechanism to move to the position corresponding to the to-be-marked part; moreover, the fixing member is arranged in the marking mechanism, the marking pen for drawing lines can be fixedly installed by the fixing member, and therefore the marking mechanism can drive the marking pen to mark the to-be-marked part by line drawing; and meanwhile, the clamping mechanism is arranged, the driving module and the clamping assembly which are in transmission connection are arranged in the clamping mechanism, the driving module can drive the clamping assembly to move, and therefore the pen cap of the marking pen can be clamped or released, namely, the pen cap and the marking pen can be separated or combined in a covering manner.

In some embodiments of the present disclosure, the marking mechanism further includes a marking guide member, a marking sliding member and a marking driving member; the marking sliding member is arranged on the marking guide member in a sliding manner, the marking driving member is connected to the marking sliding member, and the fixing member is arranged on the marking sliding member; and under driving of the marking driving member, the marking sliding member can move in an extending direction of the marking guide member so as to drive the fixing member to move.

The marking guide member and the marking sliding member which are in sliding connection are arranged in the marking mechanism, so that the marking sliding member can move in the extending direction of the marking guide member to limit a movement direction of the marking sliding member; moreover, the marking driving member connected to the marking sliding member is arranged, so the marking sliding member can be driven by the marking driving member to move; and meanwhile, the fixing member is arranged on the marking sliding member, and in the movement process of the marking sliding member, it can drive the marking pen installed on the fixing member to move together, and therefore the marking pen can make contact with the to-be-marked part, and the marking pen can also be covered with or separated from the pen cap.

In some embodiments of the present disclosure, the marking mechanism further includes a marking fixing assembly; the marking guide member is arranged on the marking fixing assembly; one end of the marking driving member is connected to the marking fixing assembly, and the other end of the marking driving member is connected to the marking sliding member; and the marking fixing assembly is configured to install the marking mechanism on the robot.

The marking fixing assembly is arranged in the marking mechanism, the marking mechanism can be installed on the robot by the marking fixing assembly, moreover, installation point positions can be provided for other parts in the marking mechanism by the marking fixing assembly, and therefore the other parts in the marking mechanism can be assembled on the marking fixing assembly.

In some embodiments of the present disclosure, the marking mechanism further includes a locking member, the locking member is arranged on the marking sliding member and is provided with a locking groove, the fixing member is arranged on the locking member through the locking groove, and the fixing member can move along the locking groove.

The locking member is arranged in the marking mechanism, and the fixing member can be installed by the locking member; and moreover, the locking groove is formed in the locking member, the fixing member can move in the locking groove, therefore, an installation position of the fixing member on the locking member can be adjusted according to needs, and then the installation position of the marking pen on the marking mechanism can be adjusted.

In some embodiments of the present disclosure, the driving module includes: a clamping guide member, a clamping sliding member and a clamping driving member; the clamping sliding member is arranged on the clamping guide member in a sliding mode, the clamping driving member is in transmission connection with the clamping sliding member, and the clamping assembly is fixed to the clamping sliding members; and under driving of the clamping driving member, the clamping sliding member slides in the extending direction of the clamping guide member so as to drive the clamping assembly to move.

The clamping guide member and the clamping sliding member which are in sliding connection are arranged in the clamping mechanism, and the clamping sliding member can move in the extending direction of the clamping guide member so as to limit the moving direction of the clamping sliding member; the clamping driving member in transmission connection with the clamping sliding member is arranged, and the clamping sliding member can be driven by the clamping driving member to move; and moreover, the clamping assembly is arranged on the clamping sliding member, the clamping assembly can be driven to move together in the moving process of the clamping sliding member, and therefore a clamping action or a releasing action on the pen cap can be completed.

In some embodiments of the present disclosure, the driving module includes two clamping sliding members, a sliding groove is formed in one of the clamping guide member and the clamping sliding members, and a sliding rail matched with the sliding groove is arranged on the other one of the clamping guide member and the clamping sliding members; and the two clamping sliding members are both connected to the clamping guide member by the sliding groove and the sliding rail.

The two clamping sliding members are arranged in the driving module, the clamping assembly can be arranged to be of a structure including two clamping members, and therefore, the two clamping members can be driven by the clamping sliding members to move so as to complete the clamping action or releasing action on the pen cap.

In some embodiments of the present disclosure, an included angle is formed between the extending direction of the sliding groove and a motion axis of the clamping driving member; a transmission groove is formed in one of the clamping sliding members and the clamping driving member, and a transmission block matched with the transmission groove is arranged on the other one of the clamping sliding members and the clamping driving member; an included angle is formed between the transmission groove and the motion axis of the clamping driving member in a plane with the two clamping sliding members; and in the motion process of the clamping driving member, under cooperation of the transmission groove and the transmission block, the two clamping sliding members can slide towards each other or slide away from each other, so as to clamp or release the pen cap.

Because the transmission groove and the transmission block which are matched are arranged on the clamping sliding members and the clamping driving member respectively, and the included angle is formed between the extending direction of the transmission groove and the motion axis of the clamping driving member, the two clamping sliding members can be driven by the clamping driving member to move towards each other or move away from each other, so as to clamp or release the pen cap by the clamping assembly arranged on the clamping sliding members.

In some embodiments of the present disclosure, the clamping assembly includes the clamping members, the clamping members are fixed to the clamping sliding members, clamping portions are arranged on the clamping members and have shapes matched with that of the pen cap.

The clamping members are fixed to the clamping sliding members, the clamping members can be driven by the clamping sliding members to move; and the clamping portions are arranged on the clamping members, the pen cap can be stably clamped by the clamping portions, thereby improving the clamping reliability of the clamping mechanism on the pen cap.

In some embodiments of the present disclosure, the clamping mechanism further includes the detection member which is arranged on the clamping assembly and is configured to detect whether the pen cap is on the clamping assembly.

The detection member is arranged on the clamping assembly, and whether the pen cap is between the clamping assemblies can be determined by the detection member, and a control signal can be outputted by the detection member to control the clamping assembly and/or the marking driving member to move, so as to clamp or release the pen cap or separate or combine the marking pen and the pen cap in a covering way.

In some embodiments of the present disclosure, the marking apparatus further includes the marking pen and the pen cap, a detachable structure is arranged between the pen cap and the marking pen, and the pen cap can detachably cover the marking pen by the detachable structure.

The detachable structure is arranged between the pen cap and the marking pen, the pen cap can be conveniently covered on the marking pen by the detachable structure or conveniently detached from the marking pen to realize separation.

In some embodiments of the present disclosure, the detachable structure includes a first magnetic member and a second magnetic member, the first magnetic member is arranged on one of the marking pen and the pen cap, and the second magnetic member is arranged on the other one of the marking pen and the pen cap.

The first magnetic member and the second magnetic member are arranged on the pen cap and the marking pen respectively, so that the pen cap can be attracted to the marking pen through a magnetic acting force of the magnetic members arranged on the pen cap and the marking pen, and the pen cap can also be conveniently detached from the marking pen.

Some embodiments of the present disclosure provide a battery assembly tool, which includes:
a robot;
the marking apparatus described in any embodiment above, the marking mechanism being installed on the robot; and
a tightening mechanism which is installed on the robot and is arranged at a position corresponding to the marking mechanism, and is configured to assemble a fastener.

The robot is arranged on the battery assembly tool, the robot can drive the marking mechanism and the tightening mechanism which are installed on the robot to move to a position corresponding to the fastener, and the fastener can be assembled by the tightening mechanism; and moreover, when detecting that the fastener is not assembled as required, the fastener to be assembled again can be marked by line drawing by the marking mechanism, thus the fastener to be assembled again can be marked and reassembled, the assembling efficiency of a battery can be improved, and the assembling quality of the battery can be improved.

In some embodiments of the present disclosure, the tightening mechanism includes a tightening guide assembly, a tightening driving member and a tightening member; the tightening guide assembly is arranged on the robot; the tightening member is arranged on the tightening guide assembly; one end of the tightening driving member is connected to the robot, and the other end of the tightening driving member is connected to the tightening member; and under the driving of the tightening driving member, the tightening member can move in the extending direction of the tightening guide assembly.

The tightening guide assembly is arranged in the tightening mechanism, the movement direction of the tightening member arranged on the tightening guide assembly can be limited and guided by the tightening guide assembly; and moreover, the tightening driving member connected to the tightening guide assembly is arranged, and the tightening member can be driven to move by the tightening driving member, thus the tightening member can be connected to the fasteners, and the fastener can be assembled by the tightening member.

In some embodiments of the present disclosure, the battery assembly tool further includes a moving mechanism, and the moving mechanism includes a connecting member, a moving guide assembly and a moving driving member; the connecting member is fixed to the robot; the marking mechanism is arranged on the connecting member; the moving guide assembly is arranged on the connecting member; the tightening guide assembly is fixed to the moving guide assembly; one end of the moving driving member is connected to the connecting member, and the other end of the moving driving member is connected to the tightening guide assembly; under the driving of the moving driving member, the tightening guide assembly can move along the extending direction of the moving guide assembly so as to drive the tightening mechanism to move; and the included angle is formed between the extending direction of the moving guide assembly and the extending direction of the tightening guide assembly.

The connecting member is arranged in the moving mechanism, and the marking mechanism and the tightening mechanism can be borne and arranged by the connecting member, so that the marking mechanism and the tightening mechanism are arranged on the robot by the connecting member; moreover, the moving guide assembly and the moving driving member are arranged, a set of tightening mechanism can be arranged on the moving guide assembly and connected to the moving driving member, and the set of tightening mechanism can be driven to move by the moving driving member, thus the position of the tightening mechanism relative to the robot can be adjusted in order to assemble the fastener.

In some embodiments of the present disclosure, the battery assembly tool further includes a jacking apparatus arranged at a position corresponding to the robot; the jacking apparatus includes: a support: a jacking mechanism which is arranged on the support and can move relative to the support in a vertical direction; and a bearing assembly which is arranged on the support in a sliding way, is in transmission connection with the jacking mechanism, and is configured to bear a to-be-assembled battery; and the bearing assembly can move relative to the support in the vertical direction under the driving of the jacking mechanism.

The support is arranged, and thus other parts in the jacking apparatus can be borne and installed by the support; the bearing assembly is arranged on the support in a sliding mode, and the bearing assembly can move along a fixed movement path so as to jack and bear the to-be-tested battery; moreover, the jacking mechanism is arranged between the bearing assembly and the support and is in transmission connection with the bearing assembly, the bearing assembly can be driven by the jacking mechanism to move to jack and bear the to-be-assembled battery, and thus the to-be-assembled battery can be separated from the transport trolley.

In some embodiments of the present disclosure, the jacking mechanism includes a jacking driving member and a jacking transmission member; one end of the jacking driving member is fixed to the support, and the other end of the jacking driving member is connected to the jacking transmission member; the jacking transmission member is arranged on the support in a sliding mode and is in transmission connection with the bearing assembly; and in a process that the jacking transmission member is driven by the jacking driving member to move, the bearing assembly moves in the vertical direction by the jacking transmission member.

The jacking transmission member is arranged on the support in the sliding mode, and the bearing assembly can be driven to move in the process that the jacking transmission member moves; and moreover, the jacking driving member is arranged, the jacking transmission member can be driven by the jacking driving member to move, and therefore the to-be-assembled battery can be jacked and borne in the process that the bearing assembly moves.

In some embodiments of the present disclosure, the jacking apparatus further includes a positioning mechanism and a guide mechanism; the positioning mechanism includes a positioning driving member and a positioning member, the positioning driving member is fixed to the support, the positioning member is connected to an output shaft of the positioning driving member, and the positioning member can be connected to the to-be-assembled battery under driving of the positioning driving member so as to position the to-be-assembled battery; the guide mechanism includes a guide frame and a guide wheel, the guide frame is fixed to the support, and the guide wheel is arranged on the guide frame; and in a process that the to-be-assembled battery moves close to or away from the jacking apparatus, the guide wheel is configured to guide the to-be-assembled battery.

The guide mechanism is arranged in the jacking apparatus, so in the process that the to-be-assembled battery is transported to a position corresponding to the jacking apparatus, the moving path of the to-be-assembled battery can be guided by the guide mechanism, thus reducing the risk that the to-be-assembled battery collides with the jacking apparatus; and moreover, the positioning mechanism is arranged, the to-be-assembled battery can be positioned by the positioning mechanism and can be stopped at a preset position corresponding to the jacking apparatus, therefore, the assembly position of the fastener on the to-be-assembled battery can be conveniently and rapidly determined, and then the assembly efficiency of the to-be-assembled battery can be improved.

In the embodiments of the present disclosure, the controller acquires the to-be-marked result data set having the position of the to-be-marked point, and based on the position of the to-be-marked point, controls the robot to drive the marking mechanism in the marking apparatus to reach the relevant position of the to-be-marked point, so as to control the marking mechanism to mark the to-be-marked point. The controller, the robot and the marking mechanism are adopted to jointly achieve the automatic marking of the to-be-marked result data set, thus the marking treatment efficiency and the marking safety can be improved, and the labor cost and the like for marking treatment can be reduced.

The above description is only an overview of the technical solution of the present disclosure, and in order to understand more clearly the technical means of the present disclosure, it can be implemented in accordance with the contents of the description, and in order to make the above and other purposes, characteristics and advantages of the present disclosure more obvious and easy to understand, the specific embodiments of the present disclosure are listed below.

### BRIEF DESCRIPTION OF THE DRAWINGS

In order to provide a clearer explanation of the embodiments of the present disclosure or the technical solutions in the prior art, a brief introduction will be given to the accompanying drawings required in the description of the embodiments or prior art. Obviously, the accompanying drawings in the following description are only some embodiments of the present disclosure. For ordinary technical personnel in the art, other accompanying drawings can be obtained based on structures shown in these drawings without any creative effort.
FIG. 1 is a flowchart 1 of a marking method applied to a marking system provided by some embodiments of the present disclosure;
FIG. 2 is a flowchart 2 of a marking method applied to a marking system provided by some embodiments of the present disclosure;
FIG. 3 is a flowchart 3 of a marking method applied to a marking system provided by some embodiments of the present disclosure;
FIG. 4 is a flowchart 4 of a marking method applied to a marking system provided by some embodiments of the present disclosure;
FIG. 5 is a flowchart of self-tightening bolts of a battery pack and marking abnormal tightening data provided by some embodiments of the present disclosure;
FIG. 6 is a flowchart 5 of a marking method applied to a marking system provided by some embodiments of the present disclosure;
FIG. 7 is an exploded diagram of a marking mechanism in a marking apparatus provided by some embodiments of the present disclosure;
FIG. 8 is a schematic structural diagram of a marking mechanism in a marking apparatus provided by some embodiments of the present disclosure;
FIG. 9 is an exploded diagram of a clamping mechanism in a marking apparatus provided by some embodiments of the present disclosure;
FIG. 10 is a schematic structural diagram of a clamping mechanism in a marking apparatus provided by some embodiments of the present disclosure;
FIG. 11 is a cross-sectional view of a clamping mechanism in a marking apparatus provided by some embodiments of the present disclosure;
FIG. 12 is a schematic structural diagram of a battery assembly tool provided by some embodiments of the present disclosure;
FIG. 13 is a schematic structural diagram of a marking mechanism and a tightening mechanism in a battery assembly tool provided by some embodiments of the present disclosure;
FIG. 14 is a schematic structural diagram of a tightening mechanism in a battery assembly tool provided by some embodiments of the present disclosure;
FIG. 15 is a schematic structural diagram 1 of a jacking mechanism in a battery assembly tool provided by some embodiments of the present disclosure; and
FIG. 16 is a schematic structural diagram 2 of a jacking mechanism in a battery assembly tool provided by some embodiments of the present disclosure.

### Reference numerals:

1-marking apparatus; 11-marking mechanism; 111-fixing member; 112-marking guide member; 113-marking sliding member; 114-marking driving member; 115-marking fixing assembly; 116-locking member; 1161-locking groove; 117-connecting block; 12-clamping mechanism; 121-driving module; 1211-clamping guide member; 1212-clamping sliding member; 12121-transmission groove; 1213-clamping driving member; 12131-transmission block; 122-clamping assembly; 1221-first clamping member; 1222-second clamping member; 1223-clamping portion; 123-clamping connecting member; 124-detection member; 13-marking pen; 14-pen cap; 141-first magnetic member; 2-robot; 3-tightening mechanism; 31-tightening member; 32-tightening driving member; 33-tightening guide assembly; 331-tightening guide rail; 332-tightening slide block; 34-connecting rod; 4-moving mechanism; 41-connecting member; 42-moving guide assembly; 421-moving guide rail; 422-moving slide block; 43-moving driving member; 5-jacking apparatus; 51-support; 52-jacking mechanism; 521-jacking driving member; 522-jacking transmission member; 53-bearing assembly; 531-bearing beam; 532-rolling member; 54-positioning mechanism; 541-positioning driving member; 542-positioning member; 55-guide mechanism; 551-guide rack; 552-guide wheel; A-first direction; and B-second direction.

### DETAILED DESCRIPTION

Embodiments of the technical solutions of the present disclosure will be described in detail below in conjunction with the drawings. The following embodiments are only used to illustrate the technical solutions of the present disclosure more clearly, and are therefore used only as examples, and should not be used to limit the protection scope of the present disclosure.

Unless otherwise defined, all technical and scientific terms used herein have the same meanings as commonly understood by those skilled in the art belonging to the technical field of the present disclosure. The terms used herein are intended only for the purpose of describing specific embodiments and are not intended to limit the present disclosure. The terms "including" and "having" and any variations thereof in the specification of the present disclosure and in the description of drawings above are intended to cover non-exclusive inclusion.

In the description of the embodiments of the present disclosure, the technical terms "first", "second", "third", and the like are used only to distinguish between different objects, and are not to be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. In addition, the character "/" herein generally indicates an "or" relationship between the associated objects.

In the description of the embodiments of the present disclosure, the technical terms "length", "width", "thickness", "upper", "lower", "front", "rear", "left", "right", "vertical", "horizontal", "top", "bottom", "inner", "outer", "circumferential", and the like indicate orientation or position relationships based on the orientation or position relationships shown in the drawings, and are intended only to facilitate and simplify the description of the embodiments of the present disclosure, but are not intended to indicate or imply that a device or element referred to must have a particular orientation or be constructed, operated or used in a particular orientation, and therefore should not be construed as limiting the embodiments of the present disclosure.

In the description of the embodiments of the present disclosure, unless otherwise clearly specified and defined, technical terms "mounting", "connected", "connection", "fixation", and the like should be broadly understood. For example, the connection may be fixed connection, detachable connection or integrated connection, may be mechanical connection or electrical connection, or may be direct connection, indirect connection through an intermediate medium, internal communication between two elements, or interaction relationship between two elements. For those of ordinary skill in the art, the specific meanings of the above terms in the embodiments of the present disclosure can be understood according to specific situations.

In the description of the embodiments of the present disclosure, unless otherwise expressly specified or qualified, the technical term "contact" shall be understood broadly, may refer to a direct contact, or a contact through an intermediate media layer, or a contact that is between two parts in contact and is substantially free of interacting force, or a contact that is between two parts in contact and has an interacting force.

In view of market development, the application of power batteries is becoming increasingly widespread, and there are also more and more types of power batteries. Power batteries are not only used in energy storage power systems such as hydropower, thermal power, wind power and solar power stations, but also widely used in electric vehicles such as electric bicycles, electric motorcycles, and electric vehicles, as well as aerospace and other fields. With the continuous expansion of the application field of power batteries, the demand in the market is also constantly expanding.

In relevant technologies, in battery production lines, semi-automated devices are mainly used in processes such as battery processing, assembling, transportation, and detection. A bolt self-tightening stage is an important stage in the installation of a battery pack cover, and is also one of the key processes in production and manufacturing of battery packs; when utilizing the semi-automated devices to implement bolt self-tightening, dozens of bolts are required to connect between an upper cover and a lower box of the battery pack for assembling, and the number of bolts is large and the bolts are distributed regularly. During the bolt self-tightening process, the tightening sequence of a plurality of bolts, a torque applied to each bolt, and an angle of rotation are all to be realized according to the relevant technical parameters. Therefore, during the bolt self-tightening process, problems such as using the wrong bolt model, missing bolts, and bolt cracking can be avoided. Meanwhile, it is usually necessary to manually mark relevant data of unqualified tightened bolts, and then perform subsequent operations such as re-tightening based on the marked data. This will cause the problem of low efficiency in marking treatment.

In order to solve above problems, the embodiments of the present disclosure discloses a marking system, method and apparatus, and a battery assembly tool; a controller acquires a to-be-marked result data set having a position of a to-be-marked point, and controls a robot to drive a marking mechanism in a marking apparatus to reach a related position of the to-be-marked point based on the position of the to-be-marked point, so that the robot controls the marking mechanism to mark the to-be-marked point. Therefore, the controller, the robot and the marking mechanism are adopted to jointly realize automatic marking of the to-be-marked result data set, which not only improves the marking treatment efficiency and the marking safety, and but also reduces the labor cost for marking treatment.

The embodiments of the present disclosure will be described in detail by combining with the accompanying drawings.

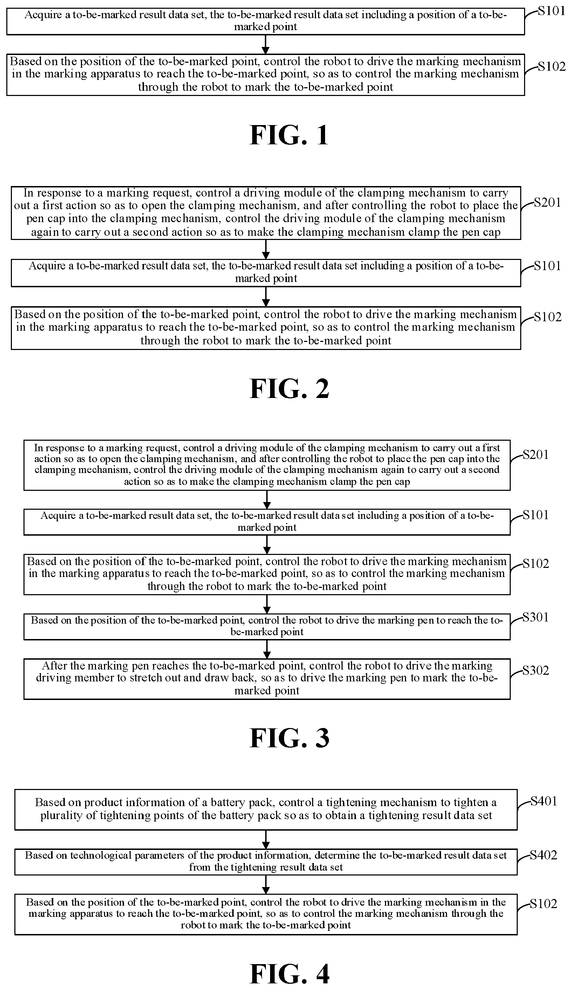

The embodiment of the present disclosure provides a marking method applied to a marking system; the marking system further includes: the controller, the robot and the marking apparatus, in which, the marking mechanism in the marking apparatus is arranged on the robot; and the marking method is applied to the controller of the marking system. As shown in FIG. 1, the marking method includes:
S101: Acquire a to-be-marked result data set, the to-be-marked result data set including a position of a to-be-marked point.

In some embodiments of the present disclosure, the controller can refer to any control device and can further be a control device in industrial production. By way of example, the controller can refer to a Programmable Logic Controller (PLC) and can be configured to carry out information interaction with the robot so as to control the robot to drive the marking mechanism in the marking apparatus to move to the designated position, such as the position of the to-be-marked point, so as to control the robot to control the marking mechanism to mark the to-be-marked point.

In some embodiments of the present disclosure, the to-be-marked result data set can be: a result data set obtained after related operations are carried out on the battery pack located on an operation station in the marking system, in which, the operation station can be a welding machine station, a tightening station, or an assembling station or the like.

Correspondingly, the to-be-marked result data set can refer to a result data set of successful or failed welding after performing welding in a plurality of welding hole positions of the battery pack, can also refer to a result data set of successful or failed tightening after performing automatic tightening in a plurality of tightening point positions of the battery pack, and can also refer to a result data set of successful or failed assembling after assembling the battery pack.

In some embodiments of the present disclosure, there can be two or more result data in the to-be-marked result data set, and the number can be determined according to actual requirements. Moreover, the to-be-marked result data set includes, but is not limited to, the position of a to-be-marked point, and can also include parameters such as a shape of the to-be-marked point.

By way of example, the controller receives a request signal transmitted after a transport trolley carrying the battery pack to reach a tightening station, and in response to the request signal, the controller transmits a tightening task carrying the request signal to a tightening gun; meanwhile, the controller records a result that the tightening gun receives the tightening task and carries out bolt self-tightening on the plurality of tightening point positions of the upper cover of the battery pack, and the tightening result includes data of abnormal tightening (successful tightening, or meeting preset tightening requirements) and data of abnormal tightening (failed tightening, or not meeting the preset tightening requirements); and here, the data of abnormal tightening can be determined as the to-be-marked result data set.

S102: Based on the position of the to-be-marked point, control the robot to drive the marking mechanism in the marking apparatus to reach the to-be-marked point, so as to control the marking mechanism through the robot to mark the to-be-marked point.

In some embodiments of the present disclosure, the robot can be an industrial robot (a robot used in industrial production); the marking apparatus includes, but is not limited to, the marking mechanism, and the marking mechanism can be provided with at least one marking device configured to apply marks to related objects, such as: the marking pen.

The marking mechanism can be arranged on the robot.

The marking mechanism in the marking apparatus can also be installed on the robot, the robot receives a related control instruction transmitted by the controller to drive the marking mechanism in the marking apparatus to move to the to-be-marked point, and therefore the robot further controls the marking mechanism to mark the to-be-marked point.

In some embodiments of the present disclosure, the controller controls the robot to drive the marking mechanism to mark the to-be-marked point, and the marking modes include, but are not limited to, line drawing (the line length and the line number are determined according to actual requirements), spraying (the spraying range can also be determined according to actual requirements) and the like.

Then, under the condition that the to-be-marked result data set is the data of abnormal tightening, the controller controls the robot to drive the marking mechanism to enter an abnormal tightening point position based on the position of the abnormal tightening point position in the data of abnormal tightening, so that the robot controls the marking mechanism to mark the abnormal tightening point position.

The controller acquires the to-be-marked result data set having the position of the to-be-marked point, and controls the robot to drive the marking mechanism in the marking apparatus to reach a related position of the to-be-marked point based on the position of the to-be-marked point, so that the robot controls the marking mechanism to mark the to-be-marked point. The controller, the robot and the marking mechanism are adopted to jointly achieve the automatic marking of the to-be-marked result data set, thus the marking treatment efficiency and the marking safety can be improved, and the labor cost and the like for marking treatment can be reduced.

In some embodiments of the present disclosure, the marking mechanism includes: the marking pen and a pen cap; and under the condition that the marking apparatus further includes a clamping mechanism for the pen cap, and the clamping mechanism is arranged corresponding to the robot, the controller can respond to a marking request to control the robot, the marking apparatus and the like to make the clamping mechanism clamp the pen cap. That is, the marking method provided by the embodiments can further execute the following S201, as shown in FIG. 2, the marking method includes:
S201: In response to a marking request, control a driving module of the clamping mechanism to carry out a first action so as to open the clamping mechanism, and after controlling the robot to place the pen cap into the clamping mechanism, control the driving module of the clamping mechanism again to carry out a second action so as to make the clamping mechanism clamp the pen cap.

In some embodiments of the present disclosure, the marking request can be a line drawing request instruction, or a spraying request instruction; and moreover, the marking request can be generated according to the to-be-marked result data set, in which, the marking request can be obtained by analyzing the to-be-marked result data set by the controller.

The marking mechanism includes: the marking pen and the pen cap which can be connected in an adsorption mode, a bayonet mode, a plug-in mode and the like. The marking pen and the pen cap can be combined through adsorption of a magnetic substance magnet, or a detachable structure can be arranged between the marking pen and the pen cap, so that the pen cap can be detachably covered on the marking pen by the detachable structure.

In some embodiments of the present disclosure, the controller responds to the marking request to control the driving module of the clamping mechanism on the marking apparatus to carry out the first action so as to open the clamping mechanism, so that after the clamping mechanism is opened, the robot is controlled to place the pen cap into the clamping mechanism, and then the driving module of the clamping mechanism is controlled to carry out a second action so as to make the clamping mechanism clamp the pen cap.

It is to be noted that before the clamping mechanism does not clamp the pen cap, it is default that the pen cap and the marking pen are detachably connected in a preset mode all the time. Therefore, head management of the marking pen is facilitated, for example, a head of the marking pen cannot be damaged at will, and pen ink of a pen point portion is not prone to being air-dried.

In response to the marking request, the controller controls the driving module of the clamping mechanism to carry out related actions so as to make the clamping mechanism clamp the pen cap, thus a basis is provided for separation of the pen cap and the marking pen, and furthermore, it subsequently facilitates the robot to drive the marking pen to mark the to-be-marked point.

In some embodiments of the present disclosure, the clamping mechanism includes a clamping assembly; and correspondingly, the driving module includes a clamping driving member which is in transmission connection with the clamping assembly. The controller responds to the marking request to control the robot and the like to make the clamping mechanism clamp the pen cap, namely, step S201 provided in the above embodiment can be achieved by the following S2011 and S2022 (not shown in the figure):
S2011: In response to the marking request, after controlling the robot to drive the marking mechanism to reach a preset position, control the clamping driving member to carry out the first action so as to drive the clamping assembly to move to reach an open state.
S2012: After the clamping assembly enters the open state, control the robot to place the pen cap into the clamping assembly, and control the clamping driving member to carry out the second action so as to separate the pen cap from the marking pen.

In some embodiments of the present disclosure, firstly, the controller transmits the marking request to the robot to control the robot to respond to the marking request to drive the marking mechanism to move to a position over the clamping assembly (at the moment, the pen cap and the marking pen are detachably connected in a preset mode all the time), and after the marking mechanism moves to the position over the clamping assembly, the clamping driving member is controlled to carry out the first action to drive the clamping assembly to move to be in the open state; and then, after the clamping assembly enters the open state, the controller controls the robot again to place the pen cap into the clamping assembly in the open state, and after the pen cap is placed into the clamping assembly, the clamping driving member is controlled to carry out the second action to drive the clamping assembly to be in a closed state so as to control the pen cap and the marking pen to be separated.

The shape of the clamping assembly is matched with that of the pen cap. Moreover, the clamping driving member can be a clamping air cylinder.

In response to the marking request, the robot controls the robot, the clamping driving member and the like to carry out related operations so as to make the clamping mechanism clamp the pen cap, thereby separating the pen cap from the marking pen, and subsequently facilitating the robot to drive the marking pen to mark the to-be-marked point.

In some embodiments of the present disclosure, the marking mechanism further includes: a marking driving member connected to the marking pen; the controller controls the clamping assembly to be opened or clamped correspondingly and controls the robot to drive the marking driving member to move, so as to separate the pen cap placed into the clamping assembly from the marking pen, namely, S2012 can be achieved by the following processes:
Step 1: After the clamping assembly enters the open state, control robot to drive the marking driving member to drive the marking pen to stretch out, so as to place the pen cap into the clamping assembly.
Step 2: After the pen cap is placed into the clamping assembly, control the clamping driving member to carry out the second action, so as to make the clamping assembly clamp the pen cap, and control the robot to drive the marking driving member to retract so as to separate the marking pen from the pen cap.

In some embodiments of the present disclosure, after the clamping assembly enters the open state, the controller controls the robot to drive the marking driving member to move so as to drive the marking pen to stretch out, thus the pen cap detachably connected to the head portion of the marking pen is placed in the clamping assembly. Moreover, after the pen cap is placed in the clamping assembly, the clamping driving member is controlled to carry out the second action so as to make the clamping assembly clamp the pen cap, and the robot is controlled again to drive the marking driving member to retract so as to separate the marking pen from the pen cap.

The marking driving member can be a pen holder air cylinder.

The controller controls the clamping assembly to be opened or clamped correspondingly and controls the robot to drive the marking driving member to move, so as to separate the pen cap placed into the clamping assembly from the marking pen, thus subsequently facilitating relevant marking operation.

In some embodiments of the present disclosure, the clamping mechanism further includes a detection member, and correspondingly, after detecting that the pen cap is in the clamping assembly based on the detection member, the controller can control the robot to drive the marking driving member to retract so as to separate the pen cap from the marking pen. That is, in the above embodiments, the "after the pen cap is placed into the clamping assembly, control the clamping driving member to carry out the second action, so as to make the clamping assembly clamp the pen cap, and control the robot to drive the marking driving member to retract so as to separate the marking pen from the pen cap" can be further implemented by the following processes:
step 1: After the pen cap is placed in the clamping assembly, control the clamping driving member to carry out the second action, and acquire that the detection member detects that the pen cap is in the clamping assembly.
Step 2: After detecting that the pen cap is in the clamping assembly, control the robot to drive the marking driving member to retract so as to separate the pen cap from the marking pen.

In some embodiments of the present disclosure, the detection member can be a correlation type photoelectric sensor and includes: a transmitting end and a receiving end, in which, the transmitting end is mainly configured to transmit a photoelectric signal, and the receiving end is configured to receive the photoelectric signal and transform the photoelectric signal into an electric signal. Moreover, the transmitting end and the receiving end can be correspondingly arranged on the two sides of the clamping assembly.

The detection member can be configured to detect whether the pen cap is (clamped) on the clamping assembly.

In some embodiments of the present disclosure, the detection member works in real time, namely it continuously detects whether the pen cap is in the clamping assembly.

After the pen cap is placed in the clamping assembly, the controller controls the clamping driving member to carry out the second action so as to drive the clamping assembly to clamp the pen cap, and the detection result that the detection member detects that the pen cap is in the clamping assembly is acquired, and after the detection result represents that the pen cap is detected to be located in the clamping assembly, the robot is controlled to drive the marking driving member to retract so as to separate the pen cap from the marking pen.

Whether the pen cap is in the clamping assembly can be detected by the detection member, thus the accuracy of identifying separation of the pen cap and the marking pen can be further improved, and accordingly a basis is provided for the controller to subsequently control the robot to drive the marking pen to mark the to-be-marked point.

Based on the above related description of the marking mechanism, the marking apparatus and the like, S102 provided by the embodiment can be implemented by S1021 and S1022. As shown in FIG. 3, the marking method includes:
S301: Based on the position of the to-be-marked point, control the robot to drive the marking pen to reach the to-be-marked point.

In some embodiments of the present disclosure, under the condition that there are a plurality of to-be-marked points, the controller controls the robot to drive the marking pen to sequentially reach each to-be-marked point in the plurality of to-be-marked points.

Under the condition that there are a plurality of to-be-marked points, the controller can adjust a marking sequence which is generated in advance based on the positions of the plurality of to-be-marked points (for example, under the condition that the to-be-marked points are point position data of unqualified bolt screwing in the upper cover of the battery pack, the marking sequence can be the upper cover bolt screwing sequence of the battery pack) to obtain a sorting result, and therefore the robot is controlled to drive the marking pen to sequentially reach the position over the corresponding to-be-marked points according to the sorting result.

S302: After the marking pen reaches the to-be-marked point, control the robot to drive the marking driving member to stretch out and draw back, so as to drive the marking pen to mark the to-be-marked point.

In some embodiments of the present disclosure, after the marking pen reaches the to-be-marked points, for example, after the marking pen reaches the position over the to-be-marked points, the controller can control the marking driving member connected to the marking pen to stretch out and draw back so as to drive the marking pen to mark the to-be-marked points.

The controller cannot only control the robot to drive the marking driving member to stretch out and draw back up and down and but also can control the robot to drive the marking driving member to do plane motion within a first distance range, in which, the first distance range can be determined with the positions of the to-be-marked points as reference points and the preset distance as a moving distance.

The controller can control the robot to drive the marking driving member to stretch out and draw back so as to drive the marking pen to mark the to-be-marked points, and thus a circular mark or a rectangular mark or the like can be obtained.

The controller controls the robot to drive the marking driving member to move so as to achieve automatic marking treatment on the to-be-marked point, thus, the marking treatment efficiency and marking safety can be improved, and moreover, the labor cost and the like for marking treatment can be reduced.

In some embodiments of the present disclosure, after the controller controls the robot to drive the marking pen to mark the to-be-marked point, the controller can correspondingly control the robot to drive the marking pen to return to an original position, that is, after S302 provided by the embodiment of the present disclosure is carried out, S303 to S305 (not shown in the figure) can further be carried out:
S303: In response to that the marking pen completes marking on the to-be-marked point, after controlling the robot to drive the marking pen to reach the preset position, control the marking driving member to stretch out so as to connect the marking pen with the pen cap.

In some embodiments of the present disclosure, in response to completion of marking the to-be-marked point by the marking pen, the controller controls the robot to drive the marking pen to return to the position over the clamping assembly and controls the robot to drive the marking driving member to stretch out so as to connect the marking pen with the pen cap.

The completion of marking the to-be-marked point by the marking pen can be determined after the marking pen executes dotting marking on the to-be-marked point for the preset number of times.

S304: After the marking pen is connected to the pen cap, control the clamping driving member to carry out the first action so as to drive the clamping assembly to move to make the clamping assembly in the open state.

In some embodiments of the present disclosure, after the marking pen is connected to the pen cap, the controller controls the clamping driving member to carry out the first action so as to drive the clamping assembly to move to reach the open state, thus subsequently facilitating the marking pen to drive the pen cap to separate the clamping assembly.

S305: After the clamping assembly enters the open state, control the robot to move so as to make the marking pen take the pen cap away.

In some embodiments of the present disclosure, after the clamping assembly enters the open state, the controller can control the robot to move to drive the marking pen to take away the pen cap, and thus facilitating the robot to execute other processes.

After the controller controls the robot to drive the marking pen to complete marking on the to-be-marked point, the robot can be correspondingly controlled to drive the marking pen to be connected to the pen cap so that the marking pen can return to the state before marking treatment, and similarly, the robot can be controlled to move to make the marking pen and the pen cap separate from the clamping assembly, and thus the clamping assembly can reset conveniently.

In some embodiments of the present disclosure, the to-be-marked result data set can be obtained by tightening the plurality of tightening points of the battery pack based on the tightening mechanism, namely, S101 provided by the embodiments can be implemented by S401 and S402, as shown in FIG. 4, the marking method includes:
S401: Based on product information of a battery pack, control a tightening mechanism to tighten a plurality of tightening points of the battery pack so as to obtain a tightening result data set.

In some embodiments of the present disclosure, the battery pack can be any type of battery pack; and the product information of the battery pack can refer to blueprint information of the battery pack.

The number of the plurality of tightening points of the battery pack can be two or more; and the plurality of tightening points can be determined according to actual requirements at specific positions of the battery pack.

In some embodiments of the present disclosure, the tightening mechanism can be a tightening gun in the marking system. Correspondingly, the tightening result data set can include: a tightening result of each tightening point in the plurality of tightening points of the battery pack, and the tightening result can be represented by failed tightening or successful tightening, and can also be represented by qualified tightening or unqualified tightening.

S402: Based on technological parameters of the product information, determine the to-be-marked result data set from the tightening result data set.

In some embodiments of the present disclosure, the process parameters of the product information can refer to preset tightening process parameters (preset tightening indexes) corresponding to the battery pack; and correspondingly, the controller can screen the to-be-marked result data set from the tightening result data set based on the preset tightening process parameters.

The controller selects the to-be-marked result data set from the tightening result data set obtained by tightening the plurality of tightening points of the battery pack, and thus a basis is provided for marking unqualified tightening data subsequently.

In some embodiments of the present disclosure, the controller can acquire the corresponding product information after receiving an in-place request transmitted by the transport trolley transporting the battery pack, and then controls the tightening mechanism to tighten the plurality of tightening points of the battery pack based on the product information, so as to obtain the tightening result data set, that is, S401 provided by the embodiments can be implemented by S4011 and S4012 (not shown in the figure):
S4011: In response to an in-place request transmitted by a transport trolley, acquire the product information of the battery pack on the transport trolley.

In some embodiments of the present disclosure, the transport trolley can be an Automated Guided Vehicle (AGV), and correspondingly, the in-place request can be transmitted after the transport trolley is loaded with the battery pack and transports to a tightening station corresponding to the tightening mechanism.

S4012: Based on the product information, control the tightening mechanism to tighten the plurality of tightening points of the battery pack based on preset tightening parameter values, so as to obtain the tightening result data set.

The preset tightening parameter values at least include: a preset torque, and a preset rotation angle.

In some embodiments of the present disclosure, after receiving the product information, the controller can transmit a corresponding tightening instruction to the tightening mechanism, so that the tightening mechanism can tighten the plurality of tightening points of the battery pack based on the preset tightening parameter values so as to obtain the tightening result data set.

The preset tightening parameter values at least include: the preset torque (the specific value is 6N for example), the preset rotation angle (the specific value is 360° for example) and the like.

In response to the in-place request, the controller controls the tightening mechanism to tighten the plurality of tightening points based on the preset tightening parameter values, so as to obtain the tightening result data set. Therefore, the tightening results (satisfactory tightening and unqualified tightening) can be collected, which subsequently facilitates screening of the corresponding to-be-marked result data set.

Correspondingly, the tightening result data corresponding to the process parameters which do not meet the product information can be determined as the to-be-marked result data set, namely S402 can be implemented by S4021 (not shown in the figure):
S4021: Select tightening result data corresponding to the process parameters that do not meet the product information from the tightening result data set, so as to obtain the to-be-marked result data set.

In some embodiments of the present disclosure, the tightening result data, namely, unqualified tightening data, corresponding to process parameters which do not meet product information are directly screened from the tightening result data set, and the unqualified tightening data are determined as the to-be-marked result data set.

The process parameters which do not meet the product information can be index requirements corresponding to the process parameters which do not meet the product information.

The tightening result data corresponding to the process parameters that do not meet the product information is selected, and thus a basis is provided for marking the unqualified tightening data subsequently.

As described above, the controller can also transmit the acquired tightening result data set to related devices, namely, the marking method provided by some embodiments of the present disclosure can also execute the following processes:
transmitting the tightening result data set to an upper computer, and transmitting the tightening result data set to a production management system corresponding to the battery pack by the upper computer; and/or, displaying the tightening result data set on a human-computer interface.

In some embodiments of the present disclosure, the controller can transmit the tightening result data to the upper computer, so that the upper computer transmits the received tightening result data set to the production management system corresponding to the battery pack, and thus a basis is provided for managing and storing the tightening result data of the subsequent battery pack.

The tightening result data set can also be displayed on a Human-Machine Interface (HMI), so that an operator can check the corresponding data conveniently.

In addition, under the condition that there is the to-be-marked result data set in the tightening result data set, related unqualified prompting, such as sound-light alarm, can also be carried out.

The acquired tightening result data set is correspondingly transmitted to the upper computer or displayed on the HMI, so as to store and display the tightening result data set.

The above marking method will be described below in conjunction with a specific embodiment; however, it is to be noted that this specific embodiment is merely intended to better illustrate the embodiments of the present disclosure and does not constitute an improper limitation of the embodiments of the present disclosure.

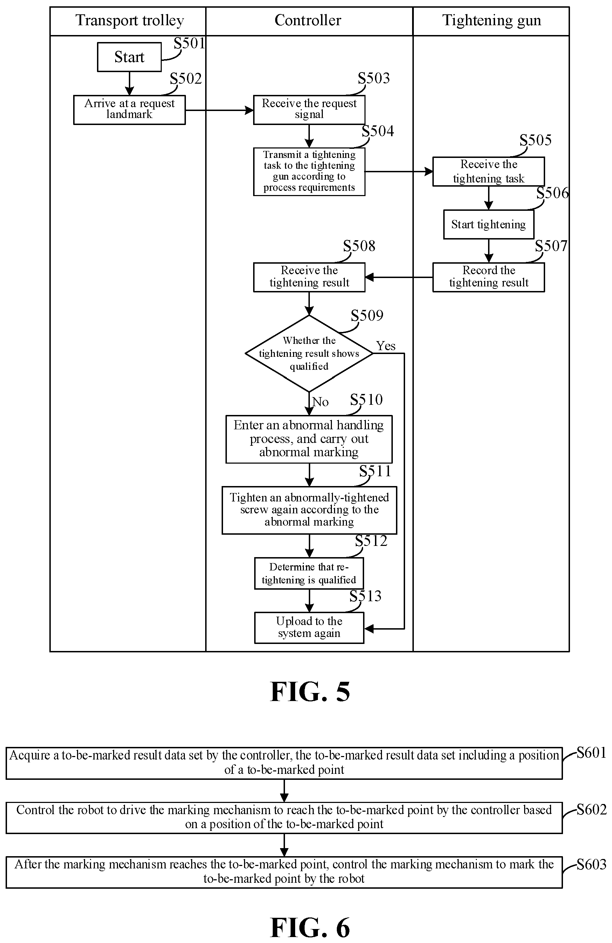

The marking method provided by some embodiments of the present disclosure is applied to marking tightening abnormal data generated by the plurality of tightening points of the battery pack in a bolt self-tightening stage, as shown in FIG. 5, the method includes:
S501: Start.
S502: Operate the transport trolley arrive at a request landmark.
S503: Receive the request signal by the controller.

Here, the bolt self-tightening link starts, the transport trolley carries the to-be-tightened battery pack to arrive at the request landmark, such as a tightening station, and synchronously transmits the request signal to the controller, so that the controller receives the request signal.

S504: Transmit a tightening task to the tightening gun by the controller according to process requirements.

S505: Receive the tightening task by the tightening gun.

S506: Start tightening by the tightening gun.

S507: Record the tightening result by the tightening gun.

S508: Receive the tightening result by the controller.

Here, after receiving the request signal, the controller transmits a corresponding tightening task to the tightening gun according to process requirements (such as: tightening process parameters), so that the tightening gun receives the tightening task; and the tightening gun is adopted to tighten the plurality of tightening points of the battery pack, and the controller is synchronously adopted to record the tightening result. In the tightening process, the process of the tightening technology is controlled and monitored through device parameters corresponding to the tightening gun.

It is to be noted that the controller here can transmit the recorded tightening result to the upper computer, and the upper computer can upload the tightening result to a Manufacturing Execution System (MES) corresponding to the battery pack; and the controller can also display the recorded tightening result on the HMI.

S509: Determine whether the tightening result shows qualified tightening by the controller, if yes, carry out S513, and if not, carry out S510.

S510: Make the controller enter an abnormal handling process, and carry out abnormal marking.

S511: Tighten an abnormally-tightened screw again by the controller according to the abnormal marking.

S512: Determine that re-tightening is qualified by the controller.

S513: Upload to the system again by the controller.

Here, the controller identifies the tightening result, that is, whether the tightening result is qualified is determined, if yes, the qualified tightening result is directly uploaded to the MES, and the bolt self-tightening stage is ended; and if not, the controller enters the abnormal handling process, abnormal marking is carried out, so that the screw (bolt) which is abnormally tightened is tightened again according to the abnormal marking until the re-tightening is qualified, and then the qualified data is uploaded to the MES again.

According to the marking method provided by some embodiments of the present disclosure, the controller collects the tightening result data sets corresponding to the plurality of tightening point positions of the battery pack and determines whether it is needed to carry out abnormal marking treatment. Moreover, under the condition that it is needed to carry out abnormal marking treatment, the controller dispatches the robot and the marking mechanism (the marking driving member connected to the marking pen) to move so as to complete corresponding marking treatment. Therefore, the controller, the robot and the marking mechanism can be adopted to jointly realize automatic marking of abnormal data, the marking treatment efficiency and the marking safety for the data of abnormal tightening can be improved, and the labor cost and the like for marking treatment on the data of abnormal tightening can be reduced.

The embodiment of the present disclosure provides another marking method applied to the marking system, the marking system includes: a controller, a robot and a marking apparatus, and a marking mechanism in the marking apparatus is arranged on the robot. As shown in FIG. 6, the marking method includes:
S601: Acquire a to-be-marked result data set by the controller, the to-be-marked result data set including a position of a to-be-marked point.
S602: Control the robot to drive the marking mechanism to reach the to-be-marked point by the controller based on a position of the to-be-marked point.
S603: After the marking mechanism reaches the to-be-marked point, control the marking mechanism to mark the to-be-marked point by the robot.

In some embodiments of the present disclosure, the controller, the robot and the marking apparatus included in the marking system can refer to the detailed description of the marking method provided by the above embodiments, and will not be listed here.

The controller acquires the to-be-marked result data set, and transmits the corresponding control instruction to the robot based on the position of the to-be-marked point in the result data set in order that the robot drives the marking mechanism in the marking apparatus to reach the to-be-marked point. Moreover, after the marking mechanism reaches the to-be-marked point, the robot controls the marking mechanism to mark the to-be-marked point.

It is to be noted that the description of the corresponding embodiments of the marking method here is similar to the description of the marking method in the above embodiments, having similar beneficial effects as those embodiments. Any technical details not disclosed in the above embodiments of the present disclosure refer to the descriptions of the above embodiments for understanding.

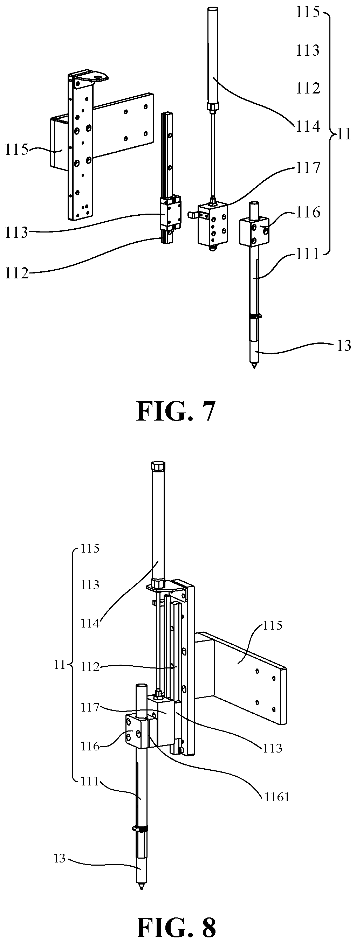

The embodiment of the present disclosure provides a marking apparatus. With reference to FIG. 7, FIG. 8, FIG. 9 and FIG. 10, the marking apparatus includes: a marking mechanism 11 and a clamping mechanism 12, in which, the marking mechanism 11 can be installed on the robot and is provided with a fixing member 111 for installing a marking pen 13; the robot is controlled by a controller of the marking system and configured to drive the marking mechanism 11 to reach the to-be-marked point and mark the to-be-marked point; the controller is configured to control the robot to drive the marking mechanism 11 to reach the to-be-marked point based on a position of the to-be-marked point in the to-be-marked result data set; the clamping mechanism 12 is arranged at a position corresponding to the marking mechanism 11 and includes a driving module 121 and a clamping assembly 122 which are in transmission connection; and the clamping assembly 122 can clamp or release a pen cap 14 of the marking pen 13 under driving of the driving module 121.

In some embodiments of the present disclosure, in the battery assembling process, it is needed to mark parts with the assembling quality not meeting the requirement so that the parts can be reassembled. The marking apparatus can be arranged in the tool for assembling batteries and configured to mark the parts, not assembled in a qualified manner, in the batteries.

In some embodiments of the present disclosure, in the bolt self-tightening stage, it is needed to mark the tightening points, which have the tightening quality not meeting the requirement, of the plurality of tightening points of the battery pack, so that the tightening points can be reassembled. The marking apparatus can be arranged in the tool for tightening the battery pack and configured to mark the tightening points, not assembled in a qualified manner, in the battery pack.

In some embodiments of the present disclosure, the marking mechanism 11 for marking can be arranged, and the marking pen 13 capable of drawing lines is driven by the marking mechanism 11 to draw lines and mark the to-be-marked part. The fixing member 111 can be arranged in the marking mechanism 11, and the marking pen 13 can be fixedly installed on the marking mechanism 11 by the fixing member 111. The marking mechanism 11 can be installed on a robot, and the marking mechanism 11 is driven by the robot to move to the position corresponding to the to-be-marked part or the to-be-marked point. For example, the robot can be a six-axis robot, and the marking mechanism 11 is installed at a tail end of a mechanical arm of the six-axis robot.

In some embodiments of the present disclosure, in order to conveniently install the marking pen 13 on the marking mechanism 11, the fixing member 111 can be arranged in the marking mechanism 11, and the fixing member 111 is arranged to be of a structure matched with the marking pen 13. For example, the fixing member 111 can be arranged to be of a cylindrical structure, and a notch is formed in a cylinder wall of the cylindrical fixing member 111 so that a size of a cylinder wall of the fixing member 111 can be adjusted in a radial direction. A locking hoop can be further arranged on the fixing member 111, and after the marking pen 13 is arranged in the cylindrical fixing member 111, the fixing member 111 clamps and fixes the marking pen 13 by the locking hoop.

In some embodiments of the present disclosure, under the condition that line drawing marking is not carried out, if a pen point of the marking pen 13 is exposed outside for a long time, ink in the marking pen 13 may be volatilized, and a clear marking symbol cannot be drawn. Therefore, it is needed to arrange a pen cap 14 on the marking pen 13. Under the condition that the marking pen 13 is not in use, the pen cap 14 can cover the marking pen 13 so as to reduce volatilization of the ink. In the line drawing process, it is needed to remove the pen cap 14 covering the marking pen 13 firstly. The clamping mechanism 12 can be arranged, and the pen cap 14 can be clamped by the clamping mechanism 12 so as to be separated from the marking pen 13.

By way of example, the clamping mechanism 12 can be arranged at the position corresponding to the marking mechanism 11. For example, the clamping mechanism 12 is arranged within the range of a position that the robot can drive the marking mechanism 11 to reach. The driving module 121 and the clamping assembly 122 can be arranged in the clamping mechanism 12, and the clamping assembly 122 is configured to clamp the pen cap 14; and the driving module 121 is in transmission connection with the clamping assembly 122, and the clamping assembly 122 can be driven by the driving module 121 to move so as to clamp or release the pen cap 14.

In the above embodiments, the marking mechanism 11 can be installed on the robot, the marking mechanism 11 can be driven by the robot to move to the position corresponding to the to-be-marked part; moreover, the fixing member 111 is arranged in the marking mechanism 11, the marking pen 13 used for drawing lines can be fixedly installed by the fixing member 111, and therefore the marking mechanism 11 can drive the marking pen 13 to complete line drawing marking on the to-be-marked part; moreover, the clamping mechanism 12 is arranged, the driving module 121 and the clamping assembly 122 which are in transmission connection are arranged in the clamping mechanism 12, the clamping assembly 122 can be driven by the driving module 121 to move to clamp or release the pen cap 14 of the marking pen 13, and thus the pen cap 14 and the marking pen 13 can be separated or combined in a covering manner.

In some embodiments of the present disclosure, as shown in FIG. 7 and FIG. 8, the marking mechanism 11 further includes a marking guide member 112, a marking sliding member 113 and a marking driving member 114; the marking sliding member 113 is arranged on the marking guide member 112 in a sliding manner, the marking driving member 114 is connected to the marking sliding member 113, and the fixing member 111 is arranged on the marking sliding member 113; and under driving of the marking driving member 114, the marking sliding member 113 can move in an extending direction of the marking guide member 112 so as to drive the fixing member 111 to move.

In some embodiments of the present disclosure, the marking pen 13 needs to move in the processes of marking, covering with the pen cap 14 and separating from the pen cap 14, and meanwhile, in order to facilitate control, a component capable of driving the marking pen 13 to move can be arranged in the marking mechanism 11.

By way of example, the marking guide member 112 can be arranged in the marking mechanism 11, and the moving direction of the marking pen 13 can be limited and guided through the marking guide member 112. The marking sliding member 113 can be arranged and is connected to the marking guide member 112 in a sliding manner, and the marking sliding member 113 can slide along the marking guide member 112. For example, a guide rail can be adopted as the marking guide member 112, and a slide block matched with the guide rail can be adopted as the marking sliding member 113.

For another example, the marking driving member 114 can be arranged in the marking mechanism 11. For example, a driving air cylinder can be adopted as the marking driving member 114, a cylinder barrel of the driving air cylinder is fixedly connected to the guide rail, and a piston rod of the driving air cylinder is fixedly connected to the slide block. The fixed member 111 can be arranged on the slide block serving as the marking sliding member 113. Thus, under the driving of the driving air cylinder, the slide block can slide along the guide rail, and therefore the fixed member 111 can be driven to move, and then the marking pen 13 installed on the fixed member 111 can be driven to move.

In the above embodiments, the marking guide member 112 and the marking sliding member 113 which are connected in the sliding manner are arranged in the marking mechanism 11, and the marking sliding member 113 can move in the extending direction of the marking guide member 112 so as to limit the moving direction of the marking sliding member 113; the marking driving member 114 connected to the marking sliding member 113 is arranged, and the marking sliding member 113 can be driven to move by the marking driving member 114; and moreover, the fixed member 111 is arranged on the marking sliding member 113, and in a moving process of the marking sliding member 113, the marking pen 13 installed on the fixed member 111 can be driven to move together, and thus the marking pen 13 can make contact with the to-be-marked part, and the marking pen 13 can also be covered with or separated from the pen cap 14.

In some embodiments of the present disclosure, as shown in FIG. 7 and FIG. 8, a marking fixing assembly 115 can be arranged in the marking mechanism 11; the marking guide member 112 is arranged on the marking fixing assembly 115; one end of the marking driving member 114 is connected to the marking fixing assembly 115, and the other end of the marking driving member 114 is connected to the marking sliding member 113; and the marking fixing assembly 115 is configured to install the marking mechanism 11 on the robot.

In some embodiments of the present disclosure, the marking fixing assembly 115 can be arranged in order to facilitate the installation of the marking mechanism 11 on the robot. By way of example, the marking fixing assembly 115 can be arranged to be of a structure including a plate-shaped member and/or a block-shaped member according to installation requirements. For example, two fixing plates and one fixing block are arranged. The two fixing plates are connected by the fixing block. One fixing plate is fixedly connected to the robot, one end of the marking guide member 112 and one end of the marking driving member 114 are fixed to the other fixing plate, and the other end of the marking driving member 114 is connected to the marking sliding member 113.

In the above embodiments, the marking fixing assembly 115 is arranged in the marking mechanism 11, thus the marking mechanism 11 can be installed on the robot by the marking fixing assembly 115, moreover, installation point positions can be provided for other parts in the marking mechanism 11 by the marking fixing assembly 115, and therefore the other parts in the marking mechanism 11 can be assembled on the marking fixing assembly 115.

In some embodiments of the present disclosure, as shown in FIG. 7 and FIG. 8, a locking member 116 can be arranged in the marking mechanism 11, the locking member 116 is arranged on the marking sliding member 113 and provided with a locking groove 1161, and the fixing member 111 is arranged on the locking member 116 by the locking groove 1161 and can move along the locking groove 1161.

In some embodiments of the present disclosure, in order to conveniently install the fixing member 111 on the marking sliding part 113, the locking member 116 for installing the fixing member 111 can be arranged. The locking member 116 is fixedly installed on the marking sliding part 113, a connecting block 117 can be fixedly arranged on the marking sliding part 113, and an installation point position can be provided by the connecting block 117; on one hand, the marking driving member 114 can be connected to the connecting block 117, and on the other hand, the locking member 116 can be fixed on the connecting block 117, and therefore, the marking driving member 114 and the locking member 116 are both connected to the marking sliding part 113.

By way of example, the locking member 116 can be arranged to be of a structure with the locking groove 1161, one part of the locking groove 1161 is arranged to be a through groove that is matched with the marking pen 13, and the other part of the locking groove 1161 is arranged to be in a form of a notch groove that penetrates through the locking member 116; and the notch groove communicates with the through groove. The marking pen 13 can be arranged in the locking groove 1161 in a penetrating mode, an opening and closing degree of the locking groove 1161 is adjusted by a fastener so as to lock and fix the fixing member 111, and therefore the marking pen 13 can be installed.

In the above embodiments, the locking member 116 is arranged in the marking mechanism 11, and the fixing member 111 can be installed by the locking member 116; and the locking groove 1161 is formed in the locking member 116, the fixing member 111 can move in the locking groove 1161, so that the installation position of the fixing member 111 on the locking member 116 can be adjusted according to needs, and then the installation position of the marking pen 13 on the marking mechanism 11 can be adjusted.

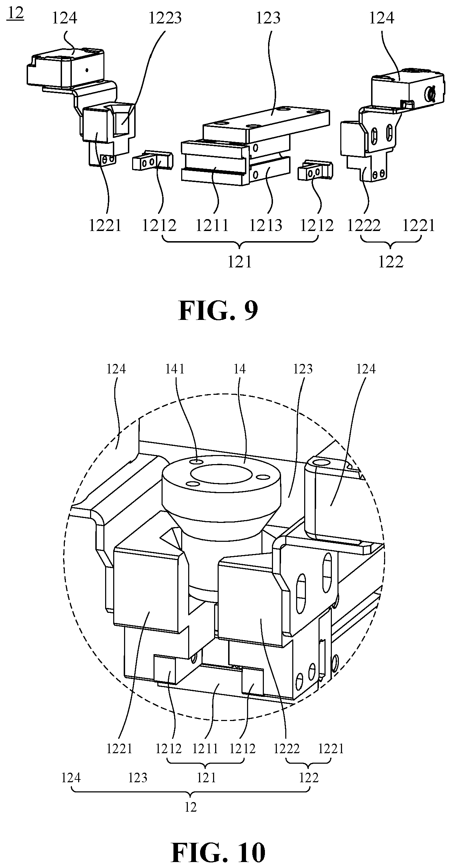

In some embodiments of the present disclosure, as shown in FIG. 9, FIG. 10 and FIG. 11, the driving module 121 in the clamping mechanism 12 can be arranged to be of a structure including a clamping guide member 1211, a clamping sliding member 1212 and a clamping driving member 1213; the clamping sliding member 1212 is arranged on the clamping guide member 1211 in a sliding manner, the clamping driving member 1213 is in transmission connection with the clamping sliding member 1212, and the clamping assembly 122 is fixed to the clamping sliding member 1212; and under the driving of the clamping driving member 1213, the clamping sliding member 1212 slides in the extending direction of the clamping guide member 1211 so as to drive the clamping assembly 122 to move.

In some embodiments of the present disclosure, in order to facilitate installation of the clamping mechanism 12, a clamping connecting member 123 can be arranged, the driving module 121 and the clamping assembly 122 can be installed on the clamping connecting member 123, and the clamping mechanism 12 is arranged at a station corresponding to a marking mechanism 11 by the clamping connecting member 123.

In some embodiments of the present disclosure, the clamping assembly 122 needs to move in a fixed direction in the process of clamping or releasing the pen cap 14, so as to accurately clamp the pen cap 14. The clamping guide member 1211 can be arranged in the driving module 121, and a movement path of the clamping assembly 122 is limited and guided by the clamping guide member 1211. The clamping sliding member 1212 can be arranged and is connected to the clamping guide member 1211 in a sliding manner, so that the clamping sliding member 1212 slides in the extending direction of the clamping guide member 1211.

In some embodiments of the present disclosure, the clamping driving member 1213 can be arranged in the clamping mechanism 12. For example, the clamping driving member 1213 can be a clamping air cylinder, a clamping air cylinder is fixedly connected to the clamping connecting member 123, and a piston rod of the clamping air cylinder is in transmission connection with the clamping sliding member 1212. The clamping assembly 122 can be arranged on the clamping slide block serving as the clamping sliding member 1212. Therefore, under the driving of the clamping air cylinder, the clamping sliding member can slide along the clamping guide member 1211.

In the above embodiments, the clamping guide member 1211 and the clamping sliding member 1212 which are in sliding connection are arranged in the clamping mechanism 12, and therefore the clamping sliding member 1212 can move in the extending direction of the clamping guide member 1211 so as to limit the movement direction of the clamping sliding member 1212; the clamping drive member 1213 in transmission connection with the clamping sliding member 1212 is arranged, and therefore the clamping sliding member 1212 can be driven by the clamping drive member 1213 to move; moreover, the clamping assembly 122 is arranged on the clamping sliding member 1212, and in the movement process of the clamping sliding member 1212, the clamping assembly 122 can be driven to move together to clamp or release the pen cap 14.

In some embodiments of the present disclosure, as shown in FIG. 9, FIG. 10 and FIG. 11, the driving module 121 includes two clamping sliding members 1212, a sliding groove is formed in one of the clamping guide member 1211 and the clamping sliding members 1212, a slide rail matched with the sliding groove is arranged on the other one of the clamping guide member 1211 and the clamping sliding members 1212, and the two clamping sliding members 1212 are both in sliding connection to the clamping guide member 1211 by the sliding groove and the slide rail.

In some embodiments, the two clamping sliding members 1212 can be arranged in the driving module 121, and therefore one clamping member can be arranged on each clamping sliding member 1212 so as to drive the two clamping members to move. For example, the clamping guide member 1211 can be arranged to be of a structure having the sliding groove, and the clamping sliding members 1212 can be arranged to be of a structure having the slide rail matched with the sliding groove; the slide rail can also be arranged on the clamping guide member 1211, and the sliding groove matched with the slide rail is formed in the clamping sliding members 1212. Therefore, the two clamping sliding members 1212 can be in sliding connection with the clamping guide member 1211 by the sliding groove and the slide rail.

In the above embodiments, the two clamping sliding members 1212 are arranged in the driving module 121, the clamping assembly 122 can be arranged to be of a structure including two clamping members, and therefore the two clamping members can be driven by the clamping sliding members 1212 to move so as to clamp or release the pen cap 14.

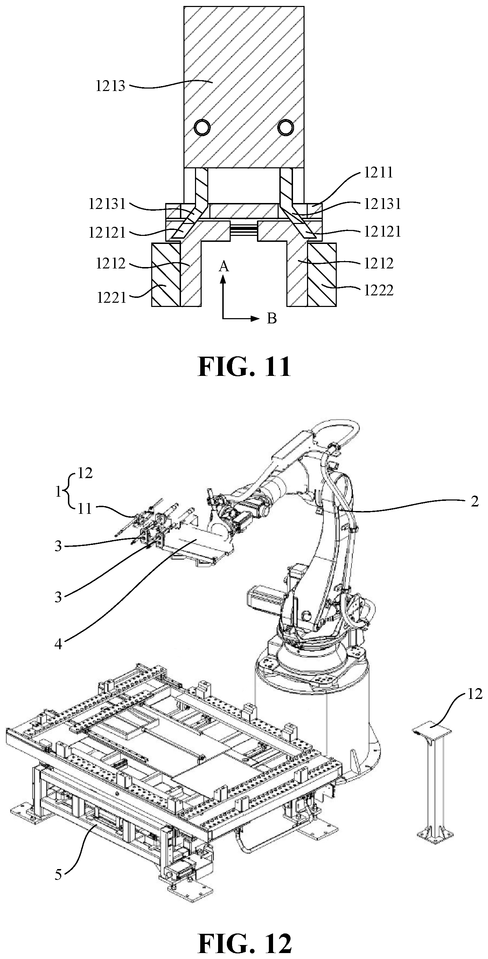

In some embodiments of the present disclosure, as shown in FIG. 11, an included angle is formed between the extending direction of the sliding groove and a motion axis of the clamping driving member 1213; a transmission groove 12121 is formed in one of the clamping sliding members 1212 and the clamping driving member 1213, a transmission block 12131 matched with the transmission groove 12121 is arranged on the other one of the clamping sliding members 1212 and the clamping driving member 1213, and an included angle is formed between the transmission groove 12121 and the motion axis of the clamping driving member 1213 in a plane with the two clamping sliding members 1212; and in the motion process of the clamping driving member 1213, the two clamping sliding members 1212 can slide towards each other or slide away from each other under cooperation of the transmission groove 12121 and the transmission block 12131 so as to clamp or release the pen cap 14.

In some embodiments of the present disclosure, because it is needed to drive the two clamping sliding members 1212 by the clamping driving member 1213 to move at the same time, the extending direction of the clamping guide member 1211 or the sliding groove formed in the clamping sliding members 1212 can be arranged to be different from the direction of the motion axis of the clamping driving member 1213, and an included angle is formed between them. For example, the clamping driving member 1213 can be arranged to move in a first direction A, the clamping sliding members 1212 can be arranged to move in a second direction B, and the first direction A and the second direction B can be perpendicular to each other.

In some embodiments of the present disclosure, the transmission groove 12121 can be formed in each clamping sliding member 1212, and the transmission block 12131 matched with the transmission groove 12121 is arranged on the clamping driving member 1213; or the transmission block can be arranged on each clamping sliding member 1212, and the transmission groove matched with the transmission block is formed in the clamping driving member 1213. In the plane with the two clamping sliding members 1212, the included angle is formed between the transmission groove 12121 and the movement axis of the clamping driving member 1213.

By way of example, the clamping air cylinder can be adopted as the clamping driving member 1213, the two transmission blocks 12131 are arranged at the end of the piston rod of the clamping air cylinder, and an included angle is formed between the extending direction of each transmission block 12131 and the axial direction of the piston rod. For example, the two transmission blocks 12131 can be arranged to be of a structure extending away from the center of the clamping driving member 1213, the included angle between each transmission block 12131 and the axial direction of the piston rod can be set to be 30° or 45° or 60° as needed, and the two transmission blocks 12131 extend towards the two sides of the clamping driving member 1213 respectively.

Correspondingly, one transmission groove 12121 matched with the corresponding transmission block 12131 is formed in each clamping sliding member 1212, and the extending direction of each transmission groove 12121 is consistent with that of the corresponding transmission block 12131. As shown in FIG. 11, in the process that an output shaft of the clamping driving member 1213 moves in the direction close to the clamping guide member 1211 in the first direction A, the two clamping sliding members 1212 move along the clamping guide member 1211 to get close to each other by the two transmission blocks 12131; and in the process that the output shaft of the clamping driving member 1213 moves in the direction away from the clamping guide member 1211 in the first direction A, the two clamping sliding members 1212 move along the clamping guide member 1211 to get away from each other by the two transmission blocks 12131.

In the above embodiments, the transmission grooves 12121 and the transmission blocks 12131 which are matched are arranged on the clamping sliding members 1212 and the clamping driving member 1213 respectively, an included angle is formed between the extending direction of the transmission grooves 12121 and the movement axis of the clamping driving member 1213, the two clamping sliding members 1212 can be driven by the clamping driving member 1213 to move towards each other or away from each other, and thus the pen cap 14 can be clamped or released by the clamping assembly 122 arranged on the clamping sliding members 1212.

In some embodiments, as shown in FIG. 8 and FIG. 9, the clamping assembly 122 can be arranged to be of a structure including the clamping members, the clamping members are fixed to the clamping sliding members 1212 and provided with clamping portions 1223, and the shape of the clamping portions 1223 is matched with that of the pen cap 14.

In some embodiments, two clamping members can be arranged, a first clamping member 1221 and a second clamping member 1222 are fixed to the two clamping sliding members 1212 respectively, and the first clamping member 1221 and the second clamping member 1222 can be driven by the two clamping sliding members 1212 to get close to each other or get away from each other.

By way of example, the clamping portions 1223 matched with the pen cap 14 can be arranged on the clamping members, and the pen cap 14 can be stably clamped by the clamping portions 1223. For example, the clamping portions 1223 can be arranged to be grooves, and the sections of the grooves can be trapezoidal. An octagonal clamping space can be defined by the two grooves in the two clamping members.

In the above embodiments, the clamping members are fixed to the clamping sliding members 1212, and the clamping members can be driven by the clamping sliding members 1212 to move; the clamping portions 1223 are arranged on the clamping members, the pen cap 14 can be stably clamped by the clamping portions 1223, thereby improving the reliability of the clamping mechanism 12 on the pen cap 14.

In some embodiments, as shown in FIG. 9 and FIG. 10, the clamping mechanism 12 further includes a detection member 124, and the detection member 124 is arranged on the clamping assemblies 122 and configured to detect whether the pen cap 14 is on the clamping assembly 122.

In some embodiments of the present disclosure, in order to determine whether the pen cap 14 is clamped on the clamping mechanism 12 and determine whether the pen cap 14 moves to a position between two clamping members, the detection member 124 can be arranged in the clamping mechanism 12, and whether the pen cap 14 is on the clamping assembly 122 is determined by the detection member 124.

By way of example, the detection member 124 can be a correlation type photoelectric sensor, a transmitting end in the correlation type photoelectric sensor is fixed to one clamping member, and a receiving end in the correlation type photoelectric sensor is fixed to the other clamping member. A light beam can be emitted by the transmitting end, and the receiving end receives the light beam. Under the condition that the pen cap 14 is located between the two clamping members, the light beam is cut off, and a signal can be outputted through the correlation type photoelectric sensor so as to determine that the pen cap 14 is located between the two clamping members. Or, the detection member 124 can be a pressure sensor, the positions, capable of making contact with the pen cap 14, of the two clamping members can be each provided with a pressure sensor; and after the pen cap 14 makes contact with the clamping members, it can be determined that the pen cap 14 is located between the two clamping members by the pressure sensor.

In the above embodiments, the detection member 124 is arranged on the clamping assembly 122, whether the pen cap 14 is located between the clamping assembly 122 can be determined by the detection member 124, and therefore the control signal can be outputted by the detection member 124 so as to control the clamping assembly 122 and/or the marking driving member 114 to move to clamp or release the pen cap 14 or separate or cover the marking pen 13 and the pen cap 14.

In some embodiments of the present disclosure, as shown in FIG. 8 and FIG. 10, the marking apparatus further includes the marking pen 13 and the pen cap 14, a detachable structure is arranged between the pen cap 14 and the marking pen 13, and the pen cap 14 can detachably cover the marking pen 13 by the detachable structure.

In some embodiments of the present disclosure, because the pen cap 14 and the marking pen 13 need to be separated or covered, a structure capable of detachably connecting the pen cap 14 and the marking pen 13 can be arranged between the pen cap 14 and the marking pen 13. The pen cap 14 can be covered on the marking pen 13 by the detachable structure, so that the pen cap 14 moves along with the marking pen 13; and the pen cap 14 can also be detached from the marking pen 13 by the detachable structure.

By way of example, clamping structures can be arranged on the pen cap 14 and the marking pen 13, for example, the clamping structures are arranged to be a bulge and a groove, the bulge is arranged on one of the pen cap 14 and the marking pen 13, and the groove matched with the bulge is arranged on the other one of the pen cap 14 and the marking pen 13; and when the pen cap 14 is covered on the marking pen 13, the bulge is clamped into the groove to realize the clamping of the pen cap 14 and the marking pen 13, namely the detachable connection of the pen cap 14 and the marking pen 13 is realized.

In the above embodiments, because the detachable structure is arranged between the pen cap 14 and the marking pen 13, the pen cap 14 is conveniently covered on the marking pen 13 by the detachable structure, and the pen cap 14 is also conveniently detached from the marking pen 13, thus separating the pen cap 14 from the marking pen 13.

In some embodiments of the present disclosure, as shown in FIG. 10, the detachable structure between the pen cap 14 and the marking pen 13 can be arranged to include a first magnetic member 141 and a second magnetic member, the first magnetic member 141 is arranged on one of the marking pen 13 and the pen cap 14, and the second magnetic member is arranged on the other one of the marking pen 13 and the pen cap 14.

In some embodiments of the present disclosure, the detachable structure between the pen cap 14 and the marking pen 13 can be a magnetic member. By way of example, a permanent magnetic member can be arranged on the pen cap 14, and correspondingly, a magnetic conducting member or a permanent magnetic member is arranged on the marking pen 13; or, the magnetic conducting member is arranged on the pen cap 14, and the permanent magnetic member is arranged on the marking pen 13. For example, the permanent magnetic member can be a magnet, and the magnetic conducting member can be an iron sheet or a steel sheet.

In the above embodiment, the first magnetic member 141 and the second magnetic member are arranged on the pen cap 14 and the marking pen 13 respectively; and through a magnetic force of the magnetic members arranged on the pen cap 14 and the marking pen 13, the pen cap 14 can be attracted to the marking pen 13, and the pen cap 14 can also be conveniently detached from the marking pen 13.

The embodiment of the present disclosure provides the battery assembly tool, and parts on a battery can be assembled by the battery assembly tool. With reference to FIG. 12, the battery assembly tool includes: a robot 2, and the marking apparatus 1 and the tightening mechanism 3 which are provided by any of above embodiments; the marking mechanism 11 in the marking apparatus 1 is installed on the robot 2; the tightening mechanism 3 is installed on the robot 2 and arranged at the position corresponding to the marking mechanism 11, and the tightening mechanism 3 is configured to assemble the fastener.

In some embodiments of present disclosure, because there are a plurality of to-be-assembled fasteners in the battery, the robot 2 can be arranged in the battery assembly tool, and the marking mechanism 11 in the marking apparatus 1 is driven by the robot 2 to move. For example, a six-axis robot can be adopted as the robot 2, the six-axis robot is fixed to the assembling station of the battery, and the marking mechanism 11 is fixed to a free end of a mechanical arm of the six-axis robot.

In some embodiments of present disclosure, in the battery assembling process, it is needed to fasten some parts in the battery by the fasteners for assembling. The tightening mechanism 3 can be arranged in the battery assembly tool, the tightening mechanism 3 is also installed on the mechanical arm of the robot 2 and is located at a position adjacent to the marking mechanism 11, and therefore the robot 2 can drive the marking mechanism 11 and the tightening mechanism 3 to move towards the to-be-tightened fasteners.

In the above embodiment, the robot 2 is arranged on the battery assembly tool, the marking mechanism 11 and the tightening mechanism 3 which are installed on the robot 2 can be driven by the robot 2 to move to the positions corresponding to fasteners, and the fasteners can be assembled by the tightening mechanism 3; and moreover, under the condition that it is detected that assembling of the fasteners does not meet the requirement, the fasteners to be assembled again can be marked by line drawing through the marking mechanism 11, so that the fasteners to be assembled again can be marked and reassembled, the assembling efficiency of the battery can be improved, and the assembling quality of the battery can be improved.

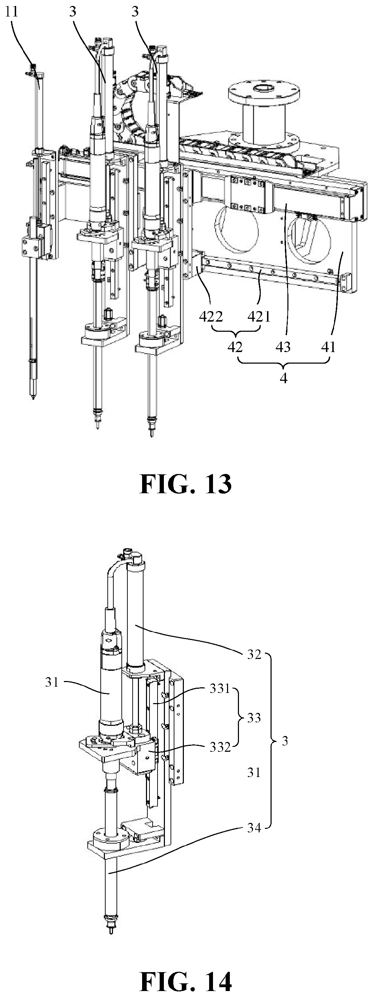

In some embodiments of the present disclosure, with reference to FIG. 13 and FIG. 14, the tightening mechanism 3 includes a tightening guide assembly 33, a tightening driving member 32 and a tightening member 31; the tightening guide assembly 33 is arranged on the robot 2; the tightening member 31 is arranged on the tightening guide assembly 33; one end of the tightening driving member 32 is connected to the robot 2, and the other end of the tightening driving member 32 is connected to the tightening member 31; and the tightening member 31 can move in the extending direction of the tightening guide assembly 33 under driving of the tightening driving member 32.

In some embodiments of the present disclosure, in the process of assembling the fasteners, it is needed to connect the tightening member 31 with the fasteners firstly, and then the tightening member 31 is needed to move in the direction close to the fasteners. The tightening guide assembly 33 can be arranged in the tightening mechanism 3, and the moving direction of the tightening member 31 is limited and guided by the tightening guide assembly 33. A tightening gun can be adopted as the tightening member 31, a connecting rod 34 can also be arranged on the tightening member 31, and the connecting rod 34 can be arranged to be of a structure matched with the fasteners, and thus the tightening member 31 can be connected to the fasteners by the connecting rod 34.

By way of example, the tightening guide assembly 33 can be arranged to be of a structure including a tightening guide rail 332 and a tightening slide block 331, the tightening slide block 331 is connected to the tightening guide rail 332 in a sliding mode, the tightening member 31 is fixed to the tightening slide block 331, and the tightening guide rail 332 is connected to the robot 2.

In some embodiments of the present disclosure, the tightening driving member 32 can be arranged in the tightening mechanism 3, one end of the tightening driving member 32 is fixedly connected to the robot 2, namely, one end of the tightening driving member 32 is fixedly connected the tightening guide rail 331, and the other end of the tightening driving member 32 is connected to the tightening member 31; and the tightening member 31 can be driven by the tightening driving member 32 to move in the extending direction of the tightening guide rail 331. For example, a driving air cylinder can be adopted as the tightening driving member 32, a cylinder barrel of the driving air cylinder is fixedly connected to the tightening guide rail 331, and a piston rod of the driving air cylinder is fixedly connected to the tightening slide block 332. Therefore, under driving of the driving air cylinder, the tightening slide block 332 can slide along the tightening guide rail 331, and thus the tightening member 31 can be driven to move.

In the above embodiments, the tightening guide assembly 33 is arranged in the tightening mechanism 3, thus the moving direction of the tightening member 31 arranged on the tightening guide assembly 33 can be limited and guided by the tightening guide assembly 33; and the tightening driving member 32 connected to the tightening guide assembly 33 is arranged, the tightening member 31 can be driven by the tightening driving member 32 to move, and therefore the tightening member 31 can be connected to the fasteners, and the assembling of the fasteners can be implemented by the tightening member 31.

In some embodiments of the present disclosure, as shown in FIG. 13, the battery assembly tool further includes a moving mechanism 4, and the moving mechanism 4 includes a connecting member 41, a moving guide assembly 42 and a moving driving member 43; the connecting member 41 is fixed to the robot 2, and the marking mechanism 11 is arranged on the connecting member 41; the moving guide assembly 42 is arranged on the connecting member 41, the tightening guide assembly 33 is fixed to the moving guide assembly 42, one end of the moving driving member 43 is connected to the connecting member 41, and the other end of the moving driving member 43 is connected to the tightening guide assembly 33; and under driving of the moving driving member 43, the tightening guide assembly 33 can move in the extending direction of the moving guide assembly 42 so as to drive the tightening mechanism 3 to move; and an included angle is formed between the extending direction of the moving guide assembly 42 and the extending direction of the tightening guide assembly 33.

In some embodiments of the present disclosure, in order to facilitate the installation of the marking mechanism 11 and the tightening mechanism 3 on the robot 2, the moving mechanism 4 can be arranged, the connecting member 41 is arranged in the moving mechanism 4, so that the tightening mechanism 3 and the marking mechanism 11 are arranged on the connecting member 41, and then the connecting member 41 is connected to the robot 2. For example, the connecting member 41 can be arranged into a plate-shaped structure.

In some embodiments of the present disclosure, the marking mechanism 11 can be fixedly arranged on the connecting member 41. Two sets of tightening mechanisms 3 can also be arranged, one set of tightening mechanism 3 can also be fixedly arranged on the connecting member 41, and the fixedly arranged tightening mechanism 3 is arranged adjacent to the marking mechanism 11; and the other set of tightening mechanism 3 can be arranged on the connecting member 41 in a sliding manner, therefore, the distance between the two sets of tightening mechanisms 3 can be adjusted according to the positions of fasteners, thus the two fasteners can be assembled conveniently at the same time.

In some embodiments of the present disclosure, the moving guide assembly 42 can be arranged in the moving mechanism 4, one set of tightening mechanism 3 is arranged on the moving guide assembly 42, and the moving direction of the tightening mechanism 3 is limited and guided by the moving guide assembly 42. For example, the moving guide assembly 42 can be arranged into a structure including a moving guide rail 421 and a moving slide block 422. The moving guide rail 421 is fixed to the connecting member 41, the moving slide block 422 is arranged on the moving guide rail 421 in a sliding manner, and one set of tightening mechanism 3 is arranged on the moving slide block 422. According to actual use requirements, the moving guide assembly 42 and the tightening guide assembly 33 can be arranged into structures vertical to each other, or the moving guide assembly 42 and the tightening guide assembly 33 can be arranged into structures with other included angles so as to respectively limit the moving directions of the tightening mechanism 3 and the tightening member 31.

In some embodiments of the present disclosure, the moving driving member 43 can be arranged in the moving mechanism 4, and the tightening mechanism 3 is driven by the moving driving member 43 to move along the extending direction of the moving guide assembly 42. For example, the moving driving member 43 can be arranged into a structure including a servo motor and a ball screw, the ball screw and the moving guide assembly 42 are arranged in parallel, the servo motor is connected to a screw rod in the ball screw, and a nut in the ball screw is connected to the tightening mechanism 3. Thus, in the rotating process of the servo motor, the screw rod can be driven to rotate, and then the nut can be driven to move along the axial direction of the screw rod, namely, the tightening mechanism 3 can be driven to move along the extending direction of the moving guide assembly 42.

In the above embodiments of the present disclosure, the connecting member 41 is arranged in the moving mechanism 4, so that the marking mechanism 11 and the tightening mechanism 3 can be borne and arranged by the connecting member 41, and the marking mechanism 11 and the tightening mechanism 3 can be arranged on the robot 2 by the connecting member 41; the moving guide assembly 42 and the moving driving member 43 are arranged, one set of tightening mechanism 3 can be arranged on the moving guide assembly 42 and is connected to the moving driving member 43, and the set of tightening mechanism 3 can be driven to move by the moving driving member 43, thus the position of the tightening mechanism 3 relative to the robot 2 can be adjusted, facilitating assembling of the fasteners.

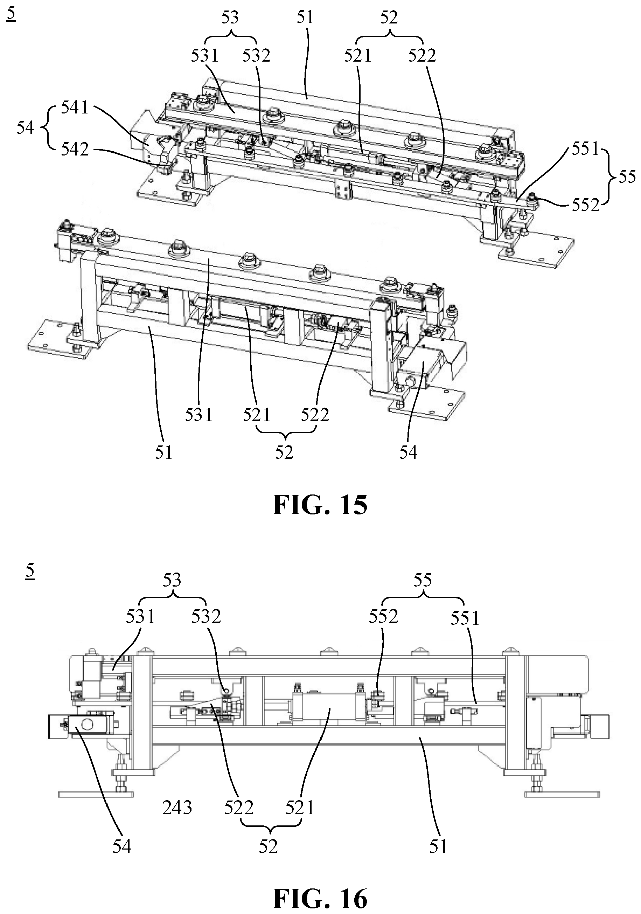

The embodiment of the present disclosure also provides a jacking mechanism in the battery assembly tool, with reference to FIG. 15 and FIG. 16, the battery assembly tool also includes a jacking apparatus 5 arranged at a position corresponding to the robot 2; the jacking apparatus 5 includes: a support 51, a jacking mechanism 52 and a bearing assembly 53; the jacking mechanism 52 is arranged on the support 51 and can perform motion in a vertical direction relative to the support 51; the bearing assembly 53 is arranged on the support 51 in a sliding manner and is in transmission connection with the jacking mechanism 52; the bearing assembly 53 is configured to bear the to-be-assembled battery; and the bearing assembly 53 can move in the vertical direction relative to the support 51 under the driving of the jacking mechanism 52.

In some embodiments of the present disclosure, in the process of assembling the to-be-assembled battery, it is needed to support the to-be-assembled battery to lift the to-be-assembled battery to a certain position, thereby facilitating the to-be-assembled battery to separate from the transport trolley. The jacking apparatus 5 can be arranged in the battery assembly tool. The support 51 is arranged in the jacking apparatus 5, the jacking apparatus 5 can be arranged at a corresponding station by the support 51, and other parts in the jacking apparatus 5 can be arranged and mounted on the support 51. For example, the support 51 can be set into a frame type structure.

In some embodiments of the present disclosure, the jacking mechanism 52 can be arranged on the support 51, and the to-be-assembled battery is driven to move by the jacking mechanism 52. For example, the jacking mechanism 52 is set into a structure capable of moving in the vertical direction.

In some embodiments of the present disclosure, the bearing assembly 53 can be arranged on the support 51, the to-be-assembled battery is supported by the bearing assembly 53, so the bearing assembly 53 is needed to move in the vertical direction. The bearing assembly 53 can be set into a structure including a bearing beam 531 and a rolling member 532, the rolling member 532 is arranged at a position, corresponding to the jacking mechanism 52, on the bearing beam 531, the bearing beam 531 is arranged on the support 51 in a sliding mode, and the jacking mechanism 52 is in transmission connection with the rolling member 532. For example, the bearing beam 531 can be set into a columnar structure, and the rolling member 532 can be a roller; and in the moving process of the jacking mechanism 52, the bearing beam 531 can be driven to move in the vertical direction through the rolling member 532.

In the above embodiments, the support 51 is arranged, so other parts in the jacking apparatus 5 can be borne and arranged by the support 51; the bearing component 53 is arranged on the support 51 in a sliding mode, so the bearing component 53 can move along a fixed motion path to jack and support the to-be-assembled battery; moreover, the jacking mechanism 52 is arranged between the bearing component 53 and the support 51, the jacking mechanism 52 is in transmission connection with the bearing component 53, and the bearing component 53 can be driven to move through the jacking mechanism 52 so as to jack and support the to-be-assembled battery, which facilitates the to-be-assembled battery to separate from the transport trolley.

In some embodiments of the present disclosure, as shown in FIG. 15 and FIG. 16, the jacking mechanism 52 includes a jacking driving member 521 and a jacking transmission member 522; one end of the jacking driving member 521 is fixed on the support 51, and the other end of the jacking driving member 521 is connected to the jacking transmission member 522; the jacking transmission member 522 is arranged on the support 51 in a sliding mode and is in transmission connection with the bearing component 53; and in the process that the jacking driving member 521 drives the jacking transmission member 522 to move, the bearing component 53 moves along the vertical direction by the jacking transmission member 522.

In some embodiments of the present disclosure, the jacking transmission member 522 can be arranged on the support 51 in a sliding mode, for example, a guide rail is fixedly arranged on the support 51, and a sliding groove matched with the guide rail is formed in the jacking transmission member 522, so the jacking transmission member 522 can be connected to the support 51 by the sliding groove and the guide rail in a sliding mode. The jacking transmission member 522 can be arranged into a wedge-shaped block structure having an inclined surface, and the inclined surface is pressed against the rolling member 532 in the bearing component 53. In the process that the jacking transmission member 522 moves along the long axis direction, the rolling member 532 can roll on the inclined surface by the inclined surface so as to drive the bearing beam 531 to move along the vertical direction.

In some embodiments of the present disclosure, the jacking driving member 521 can be arranged to be of a structure including the driving air cylinder, the cylinder barrel of the driving air cylinder is connected to the support 51, and the piston rod of the driving air cylinder is connected to the jacking transmission member 522. The jacking transmission member 522 can be driven to move by the driving air cylinder.

In the above embodiments, the jacking transmission member 522 is arranged on the support 51 in the sliding manner, so in the moving process of the jacking transmission member 522, the bearing assembly 53 can be driven to move; and the jacking driving member 521 is arranged, the jacking transmission member 522 can be driven to move by the jacking driving member 521, and therefore in the moving process of the bearing assembly 53, the bearing assembly 53 can jack and bear the to-be-assembled battery.

In some embodiments of the present disclosure, as shown in FIG. 15, the jacking apparatus 5 further includes a positioning mechanism 54 and a guide mechanism 55; the positioning mechanism 54 includes a positioning driving member 541 and a positioning member 542, the positioning driving member 541 is fixed to the support 51, the positioning member 542 is connected to the output shaft of the positioning driving member 541, and under the driving of the positioning driving member 541, the positioning member 542 can be connected to the to-be-assembled battery so as to position the to-be-assembled battery; the guide mechanism 55 includes a guide frame 551 and a guide wheel 552, the guide frame 551 is fixed to the support 51, and the guide wheel 552 is arranged on the guide frame 551; and in the process that the to-be-assembled battery moves to get close to or away from the jacking apparatus 5, the guide wheel 552 is configured to guide the to-be-assembled battery.

In some embodiments of the present disclosure, under the condition that the to-be-assembled battery is transported to a position corresponding to the jacking apparatus 5, it is needed to position the to-be-assembled battery at a preset position. The positioning mechanism 54 can be arranged in the jacking apparatus 5. The positioning mechanism 54 can be arranged on the support 51, and the positioning mechanism 54 is set to be a structure capable of performing motion. Under the condition that the to-be-assembled battery is transported to the position of the jacking apparatus 5, the positioning mechanism 54 can perform motion relative to the support 51 so as to abutted against the to-be-assembled battery, thereby limiting the to-be-assembled battery at the position of the jacking apparatus 5.

By way of example, the positioning mechanism 54 can be set to be a structure including a positioning driving member 541 and a positioning member 542. The positioning driving member 541 is fixed to the support 51, and the positioning member 542 is connected to the output shaft of the positioning driving member 541; and under the driving of the positioning driving member 541, the positioning member 542 can be connected to the to-be-assembled battery so as to limit the position of the to-be-assembled battery relative to the jacking apparatus 5. For example, the positioning driving member 541 can be a driving cylinder. The positioning member 542 can be set to be a structural form having a positioning lug, the positioning lug is fixed to a piston rod of the driving cylinder, and the positioning member 542 can be driven to move by the driving cylinder. Along the moving direction of to-be-assembled battery, namely, along a direction of a long axis of the jacking apparatus 5, both ends of the support 51 are respectively provided with a set of positioning mechanism 54, and thus, under the condition that the to-be-assembled battery moves into the jacking apparatus 5, two positioning members 542 in the two groups of positioning mechanisms 54 can be respectively abutted against a front end and a rear end of the to-be-assembled battery, so that the position of the to-be-assembled battery can be limited.

In some embodiments of the present disclosure, in the process that the transport trolley carrying the to-be-assembled battery moves, the movement path of the to-be-assembled battery can be guided to make the to-be-assembled battery move to a preset position. The guide mechanism 55 can be arranged on the support 51, and the to-be-assembled battery is guided by the guide mechanism 55.

By way of example, the guide mechanism 55 can be arranged to be of a structure including a guide frame 551 and a guide wheel 552. The guide frame 551 can be arranged to be a long-strip-shaped plate extending in the long axis direction of the jacking apparatus 5, the guide wheel 552 can be a roller or a bearing; a plurality of guide wheels 552 are arranged on the guide frame 551, and the guide wheels 552 are closer to the center of the jacking apparatus 5 than the guide frame 551. When the to-be-assembled battery is conveyed into the jacking apparatus 5, the guide wheels 552 abut against the to-be-assembled battery, thus limiting the movement position of the to-be-assembled battery.

In the above embodiment, the guide mechanism 55 is arranged in the jacking apparatus 5, so in the process that the to-be-assembled battery is conveyed to the position corresponding to the jacking apparatus 5, the movement path of the to-be-assembled battery can be guided by the guide mechanism 55, thus reducing the risk that the to-be-assembled battery collides with the jacking apparatus 5; and moreover, the positioning mechanism 54 is arranged, the to-be-assembled battery can be positioned by the positioning mechanism 54, so that the to-be-assembled battery stops at the preset position corresponding to the jacking apparatus 5, accordingly the assembling position of the fastener on the to-be-assembled battery can be conveniently and rapidly determined, and then the assembling efficiency of the to-be-assembled battery can be improved.

The embodiment of the present disclosure provides a marking system. The marking system includes: the controller, the robot 2 and the marking apparatus 1; the marking mechanism 11 in the marking apparatus 1 is arranged on the robot 2;
the controller is configured to acquire a to-be-marked result data set, the to-be-marked result data set including a position of the to-be-marked point;
the controller is further configured to control the robot 2 to drive the marking mechanism 11 to reach the to-be-marked point based on the position of the to-be-marked point; and
the robot is configured to control the marking mechanism 11 to mark the to-be-marked point after the marking mechanism 11 reaches the to-be-marked point.

In some embodiments of the present disclosure, the marking mechanism 11 includes: the marking pen 13 and the pen cap 14; the marking apparatus 1 also includes the clamping mechanism 12 of the pen cap 14, and the clamping mechanism 12 is arranged corresponding to the robot 2; and the controller is also configured to respond to the marking request to control the driving module 121 of the clamping mechanism 12 to carry out the first action, so as to open the clamping mechanism 12; the robot 2 is also configured to place the pen cap 14 into the clamping mechanism 12 after the clamping mechanism 12 is opened; and the controller is also configured to control the driving module 121 of the clamping mechanism 12 to carry out the second action after the pen cap 14 is placed into the clamping mechanism 12, so as to make the clamping mechanism 12 clamp the pen cap 14.

In some embodiments of the present disclosure, the marking mechanism 11 also includes: a marking driving member connected to the marking pen 13; the controller is also configured to control the robot 2 to drive the marking pen 13 to reach the to-be-marked point based on the position of the to-be-marked point; and the robot 2 is also configured to drive the marking driving member to stretch after the marking pen 13 reaches the to-be-marked point, so as to drive the marking pen 13 to mark the to-be-marked point.

In some embodiments of the present disclosure, the clamping mechanism 12 further includes the clamping assembly 122; the driving module 121 includes the clamping driving member which is in transmission connection with the clamping assembly 122; the controller is further configured to respond to the completion of marking the to-be-marked point by the marking pen 13 to control the robot 2 to drive the marking pen 13 to reach the preset position; the robot 2 is further configured to control the marking driving member to stretch out after the marking pen 13 reaches the preset position, so as to connect the marking pen 13 with the pen cap 14; the controller is further configured to control the clamping driving member to carry out the first action after the marking pen 13 is connected to the pen cap 14, so as to make the clamping assembly 122 enter the open state; and the controller is further configured to control the robot 2 to move after the clamping assembly 122 enters the open state, so as to drive the pen cap 14 to separate by the robot 2.

It is to be noted that the description of the corresponding embodiments of the marking system here is similar to the description of the marking method in the above embodiments, having similar beneficial effects as those embodiments. Any technical details not disclosed in the above embodiments of the system in the present disclosure refer to the descriptions of the above embodiments for understanding.

It is to be noted that the above embodiments are only used for illustrating the technical solutions of the present disclosure, and are not limited to them; although the present disclosure has been described in detail with reference to the foregoing embodiments, those of ordinary skill in the art should understand that it may still modify the technical solutions described in the foregoing embodiments, or replace some or all of the technical features therein; these modifications or substitutions do not make the essence of the corresponding technical solutions out of the scope of the technical solutions of each embodiment of the present disclosure, and they shall be covered within the scope of the description of the present disclosure. In particular, as long as there are no structural conflicts, the technical features mentioned in the individual embodiments can be combined in any way. The present disclosure is not limited to the particular embodiments disclosed herein, and includes all technical solutions falling within the scope of the specification.

### Industrial applicability

In the embodiments of the present disclosure, the controller acquires the to-be-marked result data set having the position of the to-be-marked point, and based on the position of the to-be-marked point, controls the robot to drive the marking mechanism in the marking apparatus to reach the relevant position of the to-be-marked point, so as to control the marking mechanism to mark the to-be-marked point. The controller, the robot and the marking mechanism are adopted to jointly achieve the automatic marking of the to-be-marked result data set, thus the marking treatment efficiency and the marking safety can be improved, and the labor cost and the like for marking treatment can be reduced.

## Claims

1. A marking method applied to a marking system, the marking method being applied to a controller of the marking system, the marking system further comprising: a robot and a marking apparatus, and a marking mechanism in the marking apparatus being arranged on the robot, the marking method comprising:
acquiring a to-be-marked result data set, the to-be-marked result data set comprising a position of a to-be-marked point; and
based on the position of the to-be-marked point, controlling the robot to drive the marking mechanism in the marking apparatus to reach the to-be-marked point, so as to control the marking mechanism through the robot to mark the to-be-marked point.

2. The marking method according to claim 1, wherein the marking mechanism comprises: a marking pen and a pen cap; the marking apparatus further comprises a clamping mechanism for the pen cap, and the clamping mechanism is arranged corresponding to the robot; the marking method comprises:
in response to a marking request, controlling a driving module of the clamping mechanism to carry out a first action so as to open the clamping mechanism, and after controlling the robot to place the pen cap into the clamping mechanism, controlling the driving module of the clamping mechanism again to carry out a second action so as to make the clamping mechanism clamp the pen cap.

3. The marking method according to claim 2, wherein the clamping mechanism comprises a clamping assembly; the driving module comprises a clamping driving member which is in transmission connection with the clamping assembly; and the in response to a marking request, controlling a driving module of the clamping mechanism to carry out a first action so as to open the clamping mechanism, and after controlling the robot to place the pen cap into the clamping mechanism, controlling the driving module of the clamping mechanism again to carry out a second action so as to make the clamping mechanism clamp the pen cap comprises:
in response to the marking request, after controlling the robot to drive the marking mechanism to reach a preset position, controlling the clamping driving member to carry out the first action so as to drive the clamping assembly to move to enter the open state; and
after the clamping assembly enters the open state, controlling the robot to place the pen cap into the clamping assembly, and controlling the clamping driving member to carry out the second action so as to separate the pen cap from the marking pen.

4. The marking method according to claim 3, wherein the marking mechanism further comprises: a marking driving member connected to the marking pen; the after the clamping assembly enters the open state, controlling the robot to place the pen cap into the clamping assembly, and controlling the clamping driving member to carry out the second action so as to separate the pen cap from the marking pen comprises:
after the clamping assembly enters the open state, controlling the robot to drive the marking driving member to drive the marking pen to stretch out, so as to place the pen cap into the clamping assembly; and
after the pen cap is placed into the clamping assembly, controlling the clamping driving member to carry out the second action, so as to make the clamping assembly clamp the pen cap, and controlling the robot to drive the marking driving member to retract so as to separate the marking pen from the pen cap.

5. The marking method according to claim 4, wherein the clamping mechanism further comprises a detection member; and the after the pen cap is placed into the clamping assembly, controlling the clamping driving member to carry out the second action, so as to make the clamping assembly clamp the pen cap, and controlling the robot to drive the marking driving member to retract so as to separate the marking pen from the pen cap comprises:
after the pen cap is placed into the clamping assembly, controlling the clamping driving member to carry out the second action, and acquiring that the detection member detects that the pen cap is in the clamping assembly; and
after detecting that the pen cap is in the clamping assembly, controlling the robot to drive the marking driving member to retract, so as to separate the pen cap from the marking pen.

6. The marking method according to claim 4 or 5, wherein the based on the position of the to-be-marked point, controlling the robot to drive the marking mechanism in the marking apparatus to reach the to-be-marked point, so as to control the marking mechanism through the robot to mark the to-be-marked point comprises:
based on the position of the to-be-marked point, controlling the robot to drive the marking pen to reach the to-be-marked point; and
after the marking pen reaches the to-be-marked point, controlling the robot to drive the marking driving member to stretch out and draw back, so as to drive the marking pen to mark the to-be-marked point.

7. The marking method according to claim 6, further comprising:
in response to that the marking pen completes marking on the to-be-marked point, after controlling the robot to drive the marking pen to reach the preset position, controlling the marking driving member to stretch out so as to connect the marking pen with the pen cap;
after the marking pen is connected to the pen cap, controlling the clamping driving member to carry out the first action so as to drive the clamping assembly to move to make the clamping assembly enter the open state; and
after the clamping assembly enters the open state, controlling the robot to move so as to make the marking pen take the pen cap away.

8. The marking method according to any one of claims 1 to 7, wherein the acquiring a to-be-marked result data set comprises:
based on product information of a battery pack, controlling a tightening mechanism to tighten a plurality of tightening points of the battery pack so as to obtain a tightening result data set; and
based on technological parameters of the product information, determining the to-be-marked result data set from the tightening result data set.

9. The marking method according to claim 8, wherein the based on technological parameters of the product information, determining the to-be-marked result data set from the tightening result data set comprises:
selecting tightening result data corresponding to the process parameters that do not meet the product information from the tightening result data set, so as to obtain the to-be-marked result data set.

10. The marking method according to claim 8 or 9, wherein the based on product information of a battery pack, controlling a tightening mechanism to tighten a plurality of tightening points of the battery pack so as to obtain a tightening result data set comprises:
in response to an in-place request transmitted by a transport trolley, acquiring the product information of the battery pack on the transport trolley; and
based on the product information, controlling the tightening mechanism to tighten the plurality of tightening points of the battery pack based on preset tightening parameter values, so as to obtain the tightening result data set;
in which, the preset tightening parameter values at least comprise: a preset torque, and a preset rotation angle.

11. The marking method according to any one of claims 8 to 10, further comprising:
transmitting the tightening result data set to an upper computer, and transmitting the tightening result data set to a production management system corresponding to the battery pack by the upper computer; and/or,
displaying the tightening result data set on a human-machine interface.

12. A marking method applied to a marking system, the marking system comprising: a controller, a robot and a marking apparatus, and a marking mechanism in the marking apparatus being arranged on the robot, the marking method comprising:
acquiring a to-be-marked result data set by the controller, the to-be-marked result data set comprising a position of a to-be-marked point;
controlling the robot to drive the marking mechanism to reach the to-be-marked point by the controller based on a position of the to-be-marked point; and
after the marking mechanism reaches the to-be-marked point, controlling the marking mechanism to mark the to-be-marked point by the robot.

13. A marking system, comprising: a controller, a robot and a marking apparatus, wherein a marking mechanism in the marking apparatus is arranged on the robot, wherein
the controller is configured to acquire a to-be-marked result data set, the to-be-marked result data set comprising a position of the to-be-marked point;
the controller is further configured to control the robot to drive the marking mechanism to reach the to-be-marked point based on the position of the to-be-marked point; and
the robot is configured to control the marking mechanism to mark the to-be-marked point after the marking mechanism reaches the to-be-marked point.

14. The marking system according to claim 13, wherein the marking mechanism comprises: a marking pen and a pen cap; the marking apparatus further comprises a clamping mechanism for the pen cap, and the clamping mechanism is arranged corresponding to the robot,
the controller is also configured to respond to the marking request to control the driving module of the clamping mechanism to carry out a first action, so as to open the clamping mechanism;
the robot is also configured to place the pen cap into the clamping mechanism after the clamping mechanism is opened; and
the controller is also configured to control the driving module of the clamping mechanism to carry out a second action after the pen cap is placed into the clamping mechanism, so as to make the clamping mechanism clamp the pen cap.

15. The marking system according to claim 14, wherein the marking mechanism comprises: a marking driving member connected to the marking pen,
the controller is also configured to control the robot to drive the marking pen to reach the to-be-marked point based on the position of the to-be-marked point; and
the robot is also configured to drive the marking driving member to stretch after the marking pen reaches the to-be-marked point, so as to drive the marking pen to mark the to-be-marked point.

16. The marking system according to claim 15, wherein the clamping mechanism further comprises a clamping assembly; the driving module comprises a clamping driving member which is in transmission connection with the clamping assembly;
the controller is further configured to respond to the completion of marking the to-be-marked point by the marking pen to control the robot to drive the marking pen to reach the preset position;
the robot is further configured to control the marking driving member to extend out after the marking pen reaches the preset position, so as to connect the marking pen with the pen cap;
the controller is further configured to control the clamping driving member to carry out the first action after the marking pen is connected to the pen cap, so as to make the clamping assembly enter the open state; and
the controller is further configured to control the robot to move after the clamping assembly enters the open state, so as to drive the pen cap to separate by the robot.

17. A marking apparatus, comprising:
a marking mechanism which can be installed on a robot and is provided with a fixing member, the fixing member being configured to install a marking pen, the robot being controlled by a controller of a marking system and configured to drive the marking mechanism to reach a to-be-marked point and mark the to-be-marked point, and the controller being configured to control the robot to drive the marking mechanism to reach the to-be-marked point based on a position of the to-be-marked point in a to-be-marked result data set; and
a clamping mechanism which is arranged at a position corresponding to the marking mechanism and comprises a driving module and a clamping assembly which are in transmission connection, the clamping assembly capable of being driven by the driving module to clamp or release a pen cap of the marking pen.

18. The marking apparatus according to claim 17, wherein the marking mechanism further comprises a marking guide member, a marking sliding member and a marking driving member; the marking sliding member is arranged on the marking guide member in a sliding manner, the marking driving member is connected to the marking sliding member, and the fixing member is arranged on the marking sliding member; and under the driving of the marking driving member, the marking sliding member can move in an extending direction of the marking guide member so as to drive the fixing member to move.

19. The marking apparatus according to claim 18, wherein the marking mechanism further comprises a marking fixing assembly; the marking guide member is arranged on the marking fixing assembly; one end of the marking driving member is connected to the marking fixing assembly, and the other end of the marking driving member is connected to the marking sliding member; and the marking fixing assembly is configured to install the marking mechanism on the robot.

20. The marking apparatus according to claim 19, wherein the marking mechanism further comprises a locking member, the locking member is arranged on the marking sliding member and is provided with a locking groove, the fixing member is arranged on the locking member through the locking groove, and the fixing member can move along the locking groove.

21. The marking apparatus according to any one of claims 17 to 20, wherein the driving module comprises: a clamping guide member, a clamping sliding member and a clamping driving member; the clamping sliding member is arranged on the clamping guide member in a sliding mode, the clamping driving member is in transmission connection with the clamping sliding member, and the clamping assembly is fixed to the clamping sliding members; and under the driving of the clamping driving member, the clamping sliding member slides in the extending direction of the clamping guide member so as to drive the clamping assembly to move.

22. The marking apparatus according to claim 21, wherein the driving module comprises two clamping sliding members, a sliding groove is formed in one of the clamping guide member and the clamping sliding members, and a sliding rail matched with the sliding groove is arranged on the other one of the clamping guide member and the clamping sliding members; and the two clamping sliding members are both connected to the clamping guide member by the sliding groove and the sliding rail.

23. The marking apparatus according to claim 22, wherein an included angle is formed between the extending direction of the sliding groove and a motion axis of the clamping driving member; a transmission groove is formed in one of the clamping sliding members and the clamping driving member, and a transmission block matched with the transmission groove is arranged on the other one of the clamping sliding members and the clamping driving member; an included angle is formed between the transmission groove and the motion axis of the clamping driving member in a plane with the two clamping sliding members; and in the motion process of the clamping driving member, under the cooperation of the transmission groove and the transmission block, the two clamping sliding members can slide towards each other or slide away from each other, so as to clamp or release the pen cap.

24. The marking apparatus according to claim 23, wherein the clamping assembly comprises the clamping members, the clamping members are fixed to the clamping sliding members, clamping portions are arranged on the clamping members and have shapes matched with that of the pen cap.

25. The marking apparatus according to any one of claims 17 to 20, wherein the clamping mechanism further comprises the detection member which is arranged on the clamping assembly and is configured to detect whether the pen cap is on the clamping assembly.

26. The marking apparatus according to any one of claims 17 to 20, further comprising the marking pen and the pen cap, a detachable structure is arranged between the pen cap and the marking pen, and the pen cap can detachably cover the marking pen by the detachable structure.

27. The marking apparatus according to claim 26, wherein the detachable structure comprises a first magnetic member and a second magnetic member, the first magnetic member is arranged on one of the marking pen and the pen cap, and the second magnetic member is arranged on the other one of the marking pen and the pen cap.

28. A battery assembly tool, comprising:
a robot;
the marking apparatus according to any one of claims 17 to 27, the marking mechanism being installed on the robot; and
a tightening mechanism which is installed on the robot and is arranged at a position corresponding to the marking mechanism, and is configured to assemble a fastener.

29. The battery assembly tool according to claim 28, wherein the tightening mechanism comprises a tightening guide assembly, a tightening driving member and a tightening member; the tightening guide assembly is arranged on the robot; the tightening member is arranged on the tightening guide assembly; one end of the tightening driving member is connected to the robot, and the other end of the tightening driving member is connected to the tightening member; and under the driving of the tightening driving member, the tightening member can move in the extending direction of the tightening guide assembly.

30. The battery assembly tool according to claim 29, wherein the battery assembly tool further comprises a moving mechanism, and the moving mechanism comprises a connecting member, a moving guide assembly and a moving driving member; the connecting member is fixed to the robot; the marking mechanism is arranged on the connecting member; the moving guide assembly is arranged on the connecting member; the tightening guide assembly is fixed to the moving guide assembly; one end of the moving driving member is connected to the connecting member, and the other end of the moving driving member is connected to the tightening guide assembly; under the driving of the moving driving member, the tightening guide assembly can move along the extending direction of the moving guide assembly so as to drive the tightening mechanism to move; and the included angle is formed between the extending direction of the moving guide assembly and the extending direction of the tightening guide assembly.

31. The battery assembly tool according to any one of claims 28 to 30, further comprising a jacking apparatus arranged at a position corresponding to the robot, wherein the jacking apparatus comprises:
a support:
a jacking mechanism which is arranged on the support and can move relative to the support in a vertical direction; and
a bearing assembly which is arranged on the support in a sliding way, is in transmission connection with the jacking mechanism, and is configured to bear a to-be-assembled battery; and the bearing assembly can move relative to the support in the vertical direction under the driving of the jacking mechanism.

32. The battery assembly tool according to claim 31, wherein the jacking mechanism comprises a jacking driving member and a jacking transmission member; one end of the jacking driving member is fixed to the support, and the other end of the jacking driving member is connected to the jacking transmission member; the jacking transmission member is arranged on the support in a sliding mode and is in transmission connection with the bearing assembly; and in a process that the jacking transmission member is driven by the jacking driving member to move, the bearing assembly moves in the vertical direction by the jacking transmission member.

33. The battery assembly tool according to claim 31, wherein the jacking apparatus further comprises a positioning mechanism and a guide mechanism;
the positioning mechanism comprises a positioning driving member and a positioning member, the positioning driving member is fixed to the support, the positioning member is connected to an output shaft of the positioning driving member, and the positioning member can be connected to the to-be-assembled battery under driving of the positioning driving member so as to position the to-be-assembled battery;
the guide mechanism comprises a guide frame and a guide wheel, the guide frame is fixed to the support, and the guide wheel is arranged on the guide frame; and in a process that the to-be-assembled battery moves close to or away from the jacking apparatus, the guide wheel is configured to guide the to-be-assembled battery.
